(19) Europäisches Patentamt
European Patent Office
Office européen des brevets

(11) EP 4 791 001 A1

(12) EUROPEAN PATENT APPLICATION
published in accordance with Art. 153(4) EPC

(43) Date of publication:
**12.08.2026 Bulletin 2026/33**

(21) Application number: **24874986.3**

(22) Date of filing: **04.10.2024**

(51) International Patent Classification (IPC):
***H04N 19/70** (2014.01)* ***H04N 19/59** (2014.01)*
***H04N 19/587** (2014.01)* ***H04N 19/20** (2014.01)*

(52) Cooperative Patent Classification (CPC):
**H04N 19/20; H04N 19/587; H04N 19/59; H04N 19/70**

(86) International application number:
**PCT/KR2024/015089**

(87) International publication number:
**WO 2025/075430 (10.04.2025 Gazette 2025/15)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **04.10.2023 US 202363542497 P**
**06.10.2023 US 202363543034 P**

(71) Applicant: **LG Electronics Inc.**
**Yeongdeungpo-gu**
**Seoul 07336 (KR)**

(72) Inventors:
- **KIM, Chulkeun**
  **Seoul 06772 (KR)**
- **TAN, Hendry**
  **Seoul 06772 (KR)**
- **LIM, Jaehyun**
  **Seoul 06772 (KR)**

(74) Representative: **Maikowski & Ninnemann Patentanwälte Partnerschaft mbB**
**Postfach 15 09 20**
**10671 Berlin (DE)**

# (54) ENCODING/DECODING METHOD, RECORDING MEDIUM HAVING BITSTREAM STORED THEREIN, AND METHOD FOR TRANSMITTING BITSTREAM

(57) Provided are an image encoding/decoding method, a bitstream transmission method, and a computer-readable recording medium storing a bitstream. a method includes obtaining information on optimization applied to a video from a bitstream; and determining a purpose and a method of the optimization based on the information on the optimization, wherein the information on the optimization includes first information indicating an optimization purpose and second information indicating a type of an optimization method.

FIG. 18

COMPONENT A
COMPONENT B
ENCODER
VIDEO
OPTIMIZATION FOR HUMAN VIEWING AND MACHINE ANALYSIS
PREPROCESSING TECHNIQUE
ENCODING TECHNIQUE
POSTPROCESSING TECHNIQUE
DECODER
MACHINE TASK A
MACHINE TASK B
USER



Processed by Luminess, 75001 PARIS (FR)

## Description

[Technical Field]

The present disclosure relates to an encoding/decoding method, a recording medium having a bitstream stored therein, and a method of transmitting a bitstream, and more particularly, to a method of encoding/decoding information on optimization applied to a video.

[Background Art]

Along with the development of machine learning technology, the demand for image processing-based artificial intelligence services is increasing. In order to effectively process a large amount of image data required for artificial intelligence services within limited resources, an image compression technology optimized for performing machine tasks is essential. However, since the existing image compression technologies have been developed with the goal of high-resolution and high-quality image processing for human vision, there is a problem that they are not suitable for artificial intelligence services. Accordingly, research and development on new machine-oriented image compression technologies suitable for artificial intelligence services are actively being conducted.

[Disclosure]

[Technical Problem]

The present disclosure is directed to providing an encoding/decoding method with improved encoding/decoding efficiency.

The present disclosure is also directed to providing a method of efficiently expressing information on optimization applied to a video.

The present disclosure is also directed to expressing an applied encoding optimization method and an appropriate use and attribute of an encoded bitstream in accordance with a human or machine-related purpose.

The present disclosure is also directed to providing a non-transitory computer-readable recording medium for storing a bitstream generated using an encoding method in accordance with the present disclosure.

The present disclosure is also directed to providing a method of transmitting a bitstream generated using an encoding method in accordance with the present disclosure.

Technical objects to be achieved in the present disclosure are not limited to those described above, and other technical objects that have not been described will be clearly understood by those skilled in the technical field to which the present disclosure pertains from the following description.

[Technical Solution]

According to an embodiment of the present disclosure, a method includes obtaining information on optimization applied to a video from a bitstream; and determining a purpose and a method of the optimization based on the information on the optimization, wherein the information on the optimization includes first information indicating an optimization purpose and second information indicating a type of an optimization method.

According to an embodiment of the present disclosure, a method includes performing an optimization of a video; generating information on the optimization; and encoding the information on the optimization, wherein the information on the optimization includes first information indicating an optimization purpose and second information indicating a type of an optimization method.

According to an embodiment of the present disclosure, a computer-readable digital storage medium for storing a bitstream generated using an image encoding method or apparatus.

According to an embodiment of the present disclosure, a bitstream generated by an image encoding method or apparatus is transmitted.

The features briefly summarized above regarding the present disclosure are merely illustrative aspects of the detailed description of the present disclosure described below and do not limit the scope of the present disclosure.

[Advantageous Effects]

According to the present disclosure, it is possible to provide an encoding/decoding method with improved encoding/decoding efficiency.

According to the present disclosure, it is also possible to determine the suitability of an optimization method by

providing a method of efficiently expressing information (whether optimization has been performed, the application range of optimization, and an optimization method) on optimization applied to a video, and to request and use an optimization method aligned with a purpose accordingly, leading to an improvement in system efficiency.

According to the present disclosure, it is also possible to provide a non-transitory computer-readable recording medium for storing a bitstream generated using an encoding method in accordance with the present disclosure.

According to the present disclosure, it is also possible to provide a method of transmitting a bitstream generated using an encoding method.

Effects of the present disclosure are not limited to those described above, and other effects that have not been described will be clearly understood by those skilled in the technical field to which the present disclosure pertains from the following description.

[Description of Drawings]

FIG. 1 is a diagram schematically showing a VCM system to which embodiments of the present disclosure may be applied.

FIG. 2 is a diagram schematically showing a VCM pipeline structure to which embodiments of the present disclosure may be applied.

FIG. 3 is a diagram schematically showing an image/video encoder to which embodiments of the present disclosure may be applied.

FIG. 4 is a diagram schematically showing an image/video decoder to which embodiments of the present disclosure may be applied.

FIG. 5 is a flowchart schematically showing a feature/feature map encoding procedure to which embodiments of the present disclosure may be applied.

FIG. 6 is a flowchart schematically showing a feature/feature map decoding procedure to which embodiments of the present disclosure may be applied.

FIG. 7 is a diagram illustrating an example of a feature extraction method using a feature extraction network 700.

FIG. 8A is a diagram illustrating data distribution characteristics of a video source, and FIG. 8B is a diagram illustrating data distribution characteristics of a feature set.

FIG. 9 is a diagram illustrating transform and inverse transform processes to which embodiments of the present disclosure are applicable.

FIG. 10 is a diagram illustrating a quantization group according to an embodiment of the present disclosure.

FIG. 11 is a block diagram illustrating context-adaptive binary arithmetic coding (CABAC) for encoding one syntax element.

FIGS. 12 and 13 are diagrams illustrating an entropy encoding procedure.

FIGS. 14 and 15 are diagrams illustrating an entropy decoding procedure.

FIG. 16 is a diagram showing an example of a video coding for machines (VCM) layer architecture.

FIG. 17 is a diagram showing an example of a bitstream composed of encoded abstracted features and neural network abstraction layer (NNAL) information.

FIG. 18 is a diagram illustrating encoding optimization and the use of an encoded bitstream in accordance with a purpose to which an embodiment of the present disclosure is applicable.

FIG. 19 is a diagram showing an example of a profile definition structure.

FIG. 20 is a diagram illustrating an encoding method according to an embodiment of the present disclosure.

FIG. 21 is a diagram illustrating a decoding method according to an embodiment of the present disclosure.

FIG. 22 is a diagram showing an example of a content streaming system to which embodiments of the present disclosure may be applied.

FIG. 23 is a diagram showing another example of a content streaming system to which embodiments of the present disclosure may be applied.

[Modes of the Invention]

Hereinafter, embodiments of the present disclosure will be described in detail by referring to the attached drawings for those of ordinary skill in the art to easily implement them. However, the present disclosure may be implemented in various different forms and is not limited to the embodiments described herein.

In describing embodiments of the present disclosure, detailed explanations of well-known configurations or functions are omitted when they are deemed to obscure the main point of the present disclosure. Additionally, parts irrelevant to the description of the present disclosure are omitted from the drawings, and similar reference numerals have

been assigned to similar parts.

In the present disclosure, when a certain component is described as being "connected," "coupled," or "linked" to another component, this may include not only a direct connection but also an indirect connection where another component may exist in the middle. Additionally, when a certain component is described as "including" or "having" another component, this means that, unless explicitly stated otherwise, it does not exclude other components but may further include additional components.

In the present disclosure, the terms first, second, etc. are used solely for the purpose of distinguishing one component from another and do not limit the order or importance of the components unless explicitly stated otherwise. Accordingly, a first component in one embodiment may be referred to as a second component in another embodiment, and similarly, a second component in one embodiment may be referred to as a first component in another embodiment within the range of the present disclosure.

In the present disclosure, distinguishable components are described to clearly explain their respective characteristics and do not necessarily mean that the components are separate. In other words, a plurality of components may be integrated into a single hardware or software unit, or a single component may be distributed across multiple hardware or software units. Accordingly, without explicitly describing them, such integrated or distributed embodiments are also included in the range of the present disclosure.

In the present disclosure, the components described in various embodiments do not necessarily mean essential components, and some may be optional components. Accordingly, embodiments composed of a subset of the components described in one embodiment are also included in the range of the present disclosure. Additionally, embodiments that include additional components beyond those described in various embodiments are also included in the range of the present disclosure.

The present disclosure relates to the encoding and decoding of images, and the terms used herein may have the ordinary meanings commonly used in the field of technology to which this disclosure belongs unless the terms are newly defined in the present disclosure.

The present disclosure may be applied to a method disclosed in the Versatile Video Coding (VVC) standard and/or the Video Coding for Machines (VCM) standard. In addition, the present disclosure may be applied to a method disclosed in the essential video coding (EVC) standard, the AOMedia Video 1 (AV1) standard, the 2nd generation of audio video coding standard (AVS2) or the next-generation video/image coding standard (e.g., H.267 or H.268, etc.).

The present disclosure presents various embodiments related to video/image coding, and unless otherwise stated, the embodiments may be performed in combination with each other. In the present disclosure, "video" may refer to a set of images in sequence over time. "Image" may be information generated by artificial intelligence (AI). Input information used in a process in which AI performs a series of tasks, information generated in an information processing process and output information may be used as an image. In the present disclosure, "picture" generally refers to a unit representing a single image at a specific point in time and a slice/a tile is an encoding unit that constructs a part of a picture. One picture may be composed of at least one slice/tile. In addition, a slice/a tile may include at least one coding tree unit (CTU). The CTU may be partitioned into at least one CU. A tile is a rectangular area existing within a specific tile row and a specific tile column within a picture, and may be composed of a plurality of CTUs. A tile column may be defined as a rectangular area of CTUs, and may have the same height as the height of a picture and have a width specified by a syntax element signaled from a bitstream part such as a picture parameter set. A tile row may be defined as a rectangular area of CTUs, and may have the same width as the width of a picture and a height specified by a syntax element signaled from a bitstream part such as a picture parameter set. A tile scan is a predetermined sequential ordering method of CTUs that partition a picture. Here, CTUs may be sequentially ordered according to a CTU raster scan within a tile, and tiles within a picture may be sequentially ordered according to raster scan order of tiles in a picture. A slice may include an integer number of complete tiles or an integer number of sequential complete CTU rows within a tile of a picture. A slice may be included exclusively in a single NAL unit. One picture may be composed of at least one tile group. One tile group may include at least one tile. A brick may represent a rectangular area of CTU rows within a tile in a picture. A tile may include at least one brick. A brick may represent a rectangular area of CTU rows within a tile. One tile may be partitioned into a plurality of bricks, and each brick may include at least one CTU row belonging to a tile. A tile that is not partitioned into a plurality of bricks may also be treated as a brick.

In the present disclosure, "pixel" or "pel" may refer to the smallest unit that constitutes one picture (or image). Additionally, the term "sample" may be used as a corresponding term for a pixel. A sample may generally represent a pixel or the value of a pixel and may indicate only the pixel/pixel value of a luma component or only the pixel/pixel value of a chroma component.

In an embodiment, especially when applied to VCM, a pixel/a pixel value may represent the pixel/pixel value of a component generated through the independent information or combination, synthesis and analysis of each component when there is a picture composed of a set of components with different characteristics and meaning. For example, in RGB input, it may represent only the pixel/pixel value of R, may represent only the pixel/pixel value of G, or may represent only the pixel/pixel value of B. For example, it may represent only the pixel/pixel value of a luma component synthesized by

using R, G and B components. For example, it may represent only the pixel/pixel value of information or an image extracted through the analysis of R, G and B components.

In the present disclosure, "unit" may refer to a basic unit of image processing. A unit may include at least one of a specific area of a picture or information related to the area. One unit may include one luma block and two chroma (e.g., Cb, Cr) blocks. Depending on the context, the term "unit" may be used interchangeably with "sample array," "block," "area," etc. In general, an M×N block may include a set (or array) of samples (or a sample array) or a set (or array) of transform coefficients, consisting of M columns and N rows. In an embodiment, in particular, when it is applied to VCM, a unit may represent a basic unit including information for performing a specific task.

In the present disclosure, the term "current block" may refer to one of "current coding block", "current coding unit", "encoding target block", "decoding target block", or "processing target block". When prediction is performed, "current block" may refer to "current prediction block" or "prediction target block". When transform (inverse transform)/quantization (dequantization) is performed, "current block" may refer to "current transform block" or "transform target block". When filtering is performed, "current block" may refer to "filtering target block".

In addition, in the present disclosure, "current block" may refer to "luma block of current block" unless it is explicitly stated as a chroma block. "Chroma block of current block" may be expressed by explicitly including an explicit description of a chroma block such as "chroma block" or "current chroma block".

In the present disclosure, "/" and "," may refer to "and/or". For example, "A/B" and "A, B" may refer to "A and/or B". Additionally, "A/B/C" and "A, B, C" may refer to "at least one of A, B, and/or C".

In the present disclosure, "or" may refer to "and/or". For example, "A or B" may mean 1) "A" only, 2) "B" only, or 3) "A and B." Alternatively, in the present disclosure, "or" may also mean "additionally or alternatively".

The present disclosure relates to video/image coding for machines (VCM).

VCM refers to a compression technology that encodes/decodes a part of a source image/video or information obtained from a source image/video for the purpose of machine vision. In VCM, an encoding/decoding target may be referred to as a feature. A feature may refer to information extracted from a source image/video based on a task purpose, a requirement, a neighboring environment, etc. A feature may have a different information form from a source image/video, and accordingly, a feature compression method and expression format may also be different from a video source.

VCM may be applied to various application fields. For example, in a surveillance system that recognizes and tracks objects or persons, VCM may be used to store or transmit object recognition information. In addition, in an intelligent transportation or smart traffic system, VCM may be used to transmit vehicle location information collected from GPS, sensing information collected from LIDAR, radar, etc. and various vehicle control information to other vehicles or infrastructure. In addition, in a smart city field, VCM may be used to perform the individual task of an interconnected sensor node or device.

The present disclosure provides various embodiments regarding feature/feature map coding. Unless otherwise specifically stated, embodiments of the present disclosure may be implemented individually or may be implemented in combination of at least two.

## Overview of VCM System

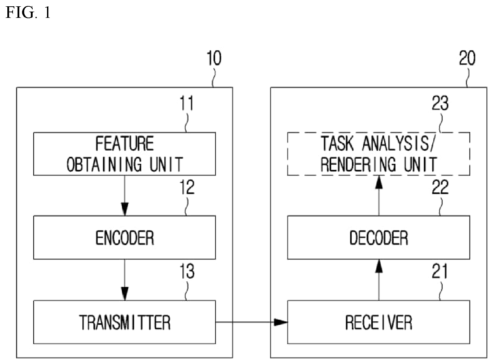

FIG. 1 is a diagram schematically showing a VCM system to which embodiments of the present disclosure may be applied.

Referring to FIG. 1, a VCM system may include an encoding apparatus 10 and a decoding apparatus 20.

An encoding apparatus 10 may compress/encode a feature/a feature map extracted from a source image/video to generate a bitstream, and transmit a generated bitstream to a decoding apparatus 20 through a storage medium or a network. An encoding apparatus 10 may also be referred to as a feature encoding apparatus. In a VCM system, a feature/a feature map may be generated in each hidden layer of a neural network. The size and number of channels of a generated feature map may vary depending on the type of a neural network or the location of a hidden layer. In the present disclosure, a feature map may be referred to as a feature set, and a feature or a feature map may be referred to as 'feature information'.

An encoding apparatus 10 may include a feature obtainer 11, an encoder 12 and a transmitter 13.

A feature obtainer 11 may obtain a feature/a feature map for a source image/video. According to an embodiment, a feature obtainer 11 may obtain a feature/a feature map from an external device, e.g., a feature extraction network. In this case, a feature obtainer 11 performs a feature reception interface function. Alternatively, a feature obtainer 11 may obtain a feature/a feature map by executing a neural network (e.g., CNN, DNN, etc.) by using a source image/video as an input. In this case, a feature obtainer 11 performs a feature extraction network function.

According to an embodiment, an encoding apparatus 10 may further include a source image generator (not shown) for obtaining a source image/video. A source image generator may be implemented by using an image sensor, a camera module, etc., and may obtain a source image/video through a process of capturing, synthesizing or generating an image/a video. In this case, a generated source image/video may be transmitted to a feature extraction network and used as input data for extracting a feature/a feature map.

An encoder 12 may encode a feature/a feature map obtained by a feature obtainer 11. An encoder 12 may perform a series of procedures such as prediction, transform, quantization, etc. to increase encoding efficiency. Encoded data (encoded feature/feature map information) may be output in the form of a bitstream. A bitstream including encoded feature/feature map information may be referred to as a VCM bitstream.

The transmitter 13 may obtain a feature/a feature map information or data output in the form of a bitstream, and may transmit the obtained information or data to a decoding apparatus 20 or another external object through a digital storage medium or a network in the form of a file or streaming. Here, the digital storage medium may include various storage medium such as USB, SD, CD, DVD, Blu-ray, HDD, SSD, etc. The transmitter 13 may include elements for generating a media file with a predetermined file format, or elements for transmitting data through a broadcasting/communication network. The transmitter 13 may be provided as a transmission device separate from the encoder 12, and in this case, the transmission device may include at least one processor for obtaining a feature/a feature map information or data output in the form of a bitstream, and a transmitter for transmitting it in the form of a file or streaming.

A decoding apparatus 20 may obtain feature/feature map information from an encoding apparatus 10 and reconstruct a feature/a feature map based on obtained information.

A decoding apparatus 20 may include a receiver 21 and a decoder 22.

A receiver 21 may receive a bitstream from an encoding apparatus 10 and obtain feature/feature map information from a received bitstream to transmit it to a decoder 22.

A decoder 22 may decode a feature/a feature map based on obtained feature/feature map information. A decoder 22 may perform a series of procedures such as dequantization, inverse transform, prediction, etc. corresponding to the operation of an encoder 14 to increase decoding efficiency.

According to an embodiment, a decoding apparatus 20 may further include a task analysis/rendering unit 23.

A task analysis/rendering unit 23 may perform task analysis based on a decoded feature/feature map. In addition, a task analysis/rendering unit 23 may render a decoded feature/feature map into a form suitable for performing a task. Based on a task analysis result and a rendered feature/feature map, various machine(-oriented) tasks may be performed.

Accordingly, a VCM system may encode/decode a feature extracted from a source image/video according to a user and/or machine request, a task purpose and a neighboring environment, and perform various machine(-oriented) tasks based on a decoded feature. A VCM system may also be implemented by extending/redesigning a video/image coding system, and may perform various encoding/decoding methods defined in the VCM standard.

VCM Pipeline

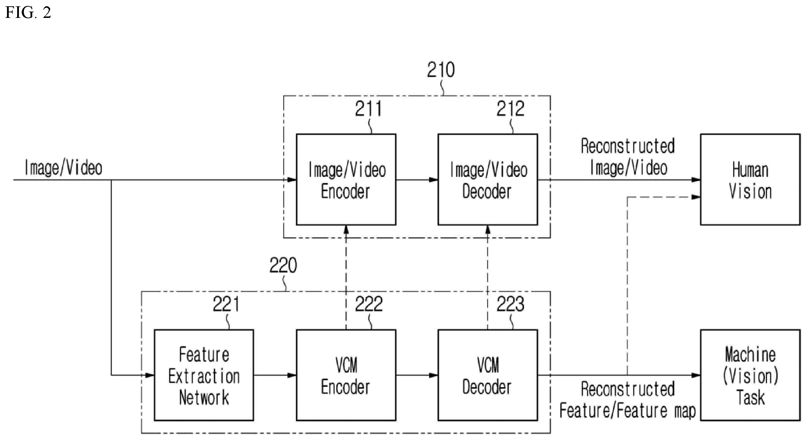

FIG. 2 is a diagram schematically showing a VCM pipeline structure to which embodiments of the present disclosure may be applied.

Referring to FIG. 2, a VCM pipeline 200 may include a first pipeline 210 for encoding/decoding an image/a video and a second pipeline 220 for encoding/decoding a feature/a feature map. In the present disclosure, a first pipeline 210 may be referred to as a video codec pipeline, and a second pipeline 220 may be referred to as a feature codec pipeline.

A first pipeline 210 may include a first stage 211 for encoding an input image/video and a second stage 212 for decoding an encoded image/video to generate a reconstructed image/video. A reconstructed image/video may be used for human viewing, i.e., human vision.

A second pipeline 220 may include a third stage 221 for extracting a feature/a feature map from an input image/video, a fourth stage 222 for encoding an extracted feature/feature map and a fifth stage 223 for decoding an encoded feature/feature map to generate a reconstructed feature/feature map. A reconstructed feature/feature map may be used for a machine (vision) task. Here, a machine (vision) task may refer to a task in which an image/a video is consumed by a machine. A machine (vision) task may be applied to a service scenario such as, for example, surveillance, intelligent transportation, smart city, intelligent industry, intelligent content, etc. According to an embodiment, a reconstructed feature/feature map may also be used for human vision.

According to an embodiment, a feature/a feature map encoded in a fourth stage 222 may be transmitted to a first stage 221 and used to encode an image/a video. In this case, an additional bitstream may be generated based on an encoded feature/feature map, and a generated additional bitstream may be transmitted to a second stage 222 and used to decode an image/a video.

According to an embodiment, a feature/a feature map decoded in a fifth stage 223 may be transmitted to a second stage 222 and used to decode an image/a video.

Although FIG. 2 shows a case in which a VCM pipeline 200 includes a first pipeline 210 and a second pipeline 220, this is just exemplary and the embodiments of the present disclosure are not limited thereto. For example, a VCM pipeline 200 may include only a second pipeline 220 or a second pipeline 220 may be extended to a plurality of feature codec pipelines.

Meanwhile, in a first pipeline 210, a first stage 211 may be performed by an image/video encoder, and a second stage 212 may be performed by an image/video decoder. In addition, in a second pipeline 220, a third stage 221 may be

performed by a VCM encoder (or, a feature/feature map encoder), and a fourth stage 222 may be performed by a VCM decoder (or, a feature/feature map decoder). Hereinafter, an encoder/decoder structure is described in detail.

Encoder

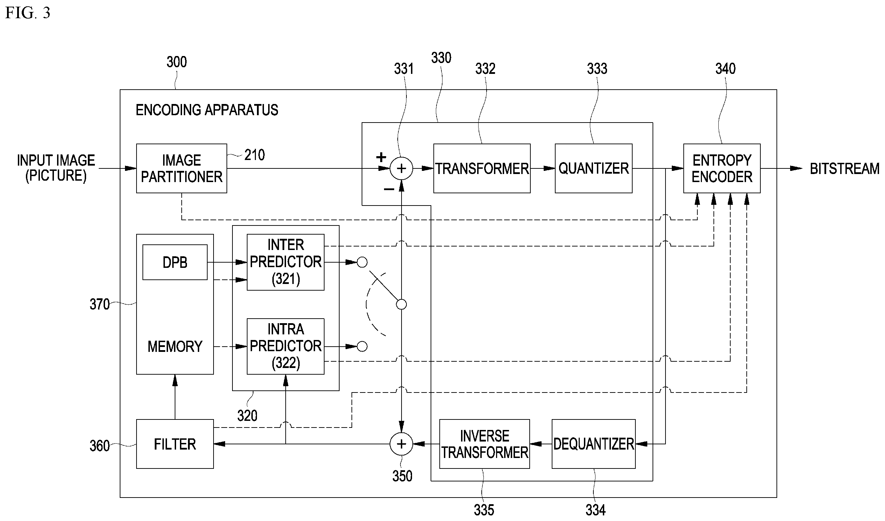

FIG. 3 is a diagram schematically showing an image/video encoder to which embodiments of the present disclosure may be applied.

Referring to FIG. 3, an image/video encoder 300 may include an image partitioner 310, a predictor 320, a residual processor 330, an entropy encoder 340, an adder 350, a filter 360 and a memory 370. A predictor 320 may include an inter predictor 321 and an intra predictor 322. A residual processor 330 may include a transformer 332, a quantizer 333, a dequantizer 334 and an inverse transformer 335. A residual processor 330 may further include a subtractor 331. An adder 350 may be referred to as a reconstructor or a reconstructed block generator. An image partitioner 310, a predictor 320, a residual processor 330, an entropy encoder 340, an adder 350 and a filter 360 described above may be configured by at least one hardware component (e.g., an encoder chipset or a processor) according to an embodiment. In addition, a memory 370 may include a decoded picture buffer (DPB) and may be configured by a digital storage medium. A hardware component described above may further include a memory 370 as an internal/external component.

An image partitioner 310 may partition an input image (or picture, frame) input to an image/video encoder 300 into at least one processing unit. As an example, a processing unit may be referred to as a coding unit (CU). A coding unit may be recursively partitioned from a coding tree unit (CTU) or a largest coding unit (LCU) according to a quad-tree binary-tree ternary-tree (QTBTTT) structure. For example, one coding unit may be partitioned into a plurality of coding units of deeper depth based on a quad-tree structure, a binary-tree structure and/or a ternary structure. In this case, for example, a quad-tree structure may be applied first and a binary tree structure and/or a ternary structure may be applied later. Alternatively, a binary tree structure may be applied first. An image/video coding procedure according to the present disclosure may be performed based on a final coding unit that is no longer partitioned. In this case, the maximum coding unit may be used as a final coding unit based on coding efficiency according to image characteristics, etc. or if necessary, a coding unit may be recursively partitioned into coding units of deeper depth and a coding unit of an optimal size may be used as a final coding unit. Here, a coding procedure may include a procedure such as prediction, transform, reconstruction, etc. described later. As another example, a processing unit may further include a prediction unit (PU) or a transform unit (TU). In this case, a prediction unit and a transform unit may be divided or partitioned from a final coding unit described above, respectively. A prediction unit may be a unit of sample prediction, and a transform unit may be a unit for deriving a transform coefficient and/or a unit for deriving a residual signal from a transform coefficient.

A unit may be used interchangeably with a term such as a block, an area, etc. in some cases. In general, a MxN block may represent a set of transform coefficients or samples consisting of M columns and N rows. A sample may generally represent a pixel or a pixel value, or may represent only the pixel/pixel value of a luma component, or may represent only the pixel/pixel value of a chroma component. A sample may be used as a term corresponding to a pixel or a pel.

An image/video encoder 300 may generate a residual signal (a residual block, a residual sample array) by subtracting a prediction signal (a predicted block, a prediction sample array) output from an inter predictor 321 or an intra predictor 322 from an input image signal (an original block, an original sample array), and a generated residual signal is transmitted to a transformer 332. In this case, as shown, a unit that subtracts a prediction signal (a prediction block, a prediction sample array) from an input image signal (an original block, an original sample array) within an image/video encoder 300 may be referred to as a subtractor 331. A predictor may perform prediction on a block to be processed (hereinafter, referred to as a current block) and generate a predicted block including prediction samples for a current block. A predictor may determine whether intra prediction or inter prediction is applied in a unit of a current block or a CU. A predictor may generate various information related to prediction such as prediction mode information, etc. and transmit it to an entropy encoder 340. Prediction-related information may be encoded by an entropy encoder 340 and may be output in the form of a bitstream.

An intra predictor 322 may predict a current block by referring to samples within a current picture. In this case, referenced samples may be located in the neighboring area of a current block or may be located farther away according to a prediction mode. In intra prediction, prediction modes may include a plurality of non-directional modes and a plurality of directional modes. A non-directional mode may include, for example, a DC mode and a planar mode. A directional mode may include, for example, 33 directional prediction modes or 65 directional prediction modes according to the granularity of a prediction direction. However, this is an example, and a greater or fewer number of directional prediction modes may be used according to a configuration. An intra predictor 322 may also determine a prediction mode applied to a current block by using a prediction mode applied to a neighboring block.

An inter predictor 321 may derive a predicted block for a current block based on a reference block (a reference sample array) specified by a motion vector on a reference picture. In this case, in order to reduce the amount of motion information transmitted in the inter prediction mode, motion information may be predicted at the block, sub-block, or

sample level based on the correlation of motion information between the neighboring block and the current block. The motion information may include a motion vector and a reference picture index. The motion information may further include information on an inter prediction direction (L0 prediction, L1 prediction, Bi prediction, etc.). In inter prediction, neighboring block may include spatial neighboring block present within the current picture and temporal neighboring block present in the reference picture. A reference picture including a reference block and a reference picture including a temporal neighboring block may be the same or different. A temporal neighboring block may be referred to as a collocated reference block or a collocated CU (colCU), and a reference picture including a temporal neighboring block may be referred to as a collocated picture (colPic). For example, an inter predictor 321 may construct a motion information candidate list based on neighboring blocks and generate information indicating which candidate is used to derive the motion vector and/or reference picture index of a current block. Inter prediction may be performed based on various prediction modes, and for example, in a skip mode and a merge mode, an inter predictor 321 may use the motion information of a neighboring block as the motion information of a current block. In a skip mode, unlike a merge mode, a residual signal may not be transmitted. In a motion vector prediction (MVP) mode, the motion vector of a neighboring block may be used as a motion vector predictor, and the motion vector of a current block may be indicated by signaling a motion vector difference.

A predictor 320 may generate a prediction signal based on various prediction methods. For example, a predictor may apply intra prediction or inter prediction for prediction for one block, and may also apply both intra prediction and inter prediction simultaneously. It may be referred to as combined inter and intra prediction (CIIP). In addition, a predictor may be based on an intra block copy (IBC) prediction mode or a palette mode for prediction for a block. An IBC prediction mode or a palette mode may be used for content image/video coding, for example, such as screen content coding (SCC), etc. IBC basically performs prediction within the current picture, but since it derives a reference block within the current picture, it may operate similarly to inter prediction. In other words, IBC may use at least one of the inter prediction methods described in the present disclosure. A palette mode may be considered as an example of intra coding or intra prediction. When a palette mode is applied, a sample value within a picture may be signaled based on information related to a palette table and a palette index.

A prediction signal generated by a predictor 320 may be used to generate a reconstructed signal or to generate a residual signal. A transformer 332 may generate transform coefficients by applying a transform method to a residual signal. For example, a transform method may include at least one of Discrete Cosine Transform (DCT), Discrete Sine Transform (DST), Karhunen-Loeve Transform (KLT), Graph-Based Transform (GBT), or Conditionally Non-linear Transform (CNT). Here, GBT refers to a transform obtained from a graph when the relationship information between pixels is represented as a graph. CNT refers to a transform obtained based on a prediction signal generated by using all previously reconstructed pixels. In addition, a transform process may be applied to a pixel block of the same square size or to a non-square variable-sized block.

A quantizer 333 may quantize transform coefficients and transmit them to an entropy encoder 340, and an entropy encoder 340 may encode a quantized signal (information on quantized transform coefficients) and output it as a bitstream. Information on quantized transform coefficients may be referred to as residual information. A quantizer 333 may reorder block-shaped quantized transform coefficients in the form of a one-dimensional vector based on a coefficient scan order, and may generate information on quantized transform coefficients based on quantized transform coefficients in the form of a one-dimensional vector. An entropy encoder 340 may perform various encoding methods such as exponential Golomb, context-adaptive variable length coding (CAVLC), context-adaptive binary arithmetic coding (CABAC), etc. An entropy encoder 340 may encode not only quantized transform coefficients but also information necessary for video/image reconstruction (e.g., the value of syntax elements, etc.) together or separately. Encoded information (E.G., encoded video/image information) may be transmitted or stored in the form of a bitstream in a network abstraction layer (NAL) unit. Image/video information may further include information on various parameter sets such as an adaptation parameter set (APS), a picture parameter set (PPS), a sequence parameter set (SPS) or a video parameter set (VPS), etc. In addition, video/image information may further include general constraint information. In addition, image/video information may further include a method for generating and using encoded information, a purpose thereof, etc. In the present disclosure, information and/or syntax elements transmitted/signaled from an image/video encoder to an image/video decoder may be included in image/video information. Image/video information may be encoded through an encoding procedure described above and included in a bitstream. A bitstream may be transmitted through a network or stored in a digital storage medium. Here, the network may include a broadcast network and/or a communication network, etc., and the digital storage medium may include various storage media such as USB, SD, CD, DVD, Blu-ray, HDD, SSD, etc. A transmitter (not shown) for transmitting and/or a storage unit (not shown) for storing a signal output from an entropy encoder 340 may be constructed as an internal/external element of an image/video encoder 300 or a transmitter may be included in an entropy encoder 340.

The quantized transform coefficients output from a quantizer 333 may be used to generate a prediction signal. For example, a residual signal (a residual block or residual samples) may be reconstructed by applying dequantization and inverse transform to quantized transform coefficients through a dequantizer 334 and an inverse transformer 335. An adder 350 may generate a reconstructed signal (a reconstructed picture, a reconstructed block, a reconstructed sample array) by adding a reconstructed residual signal to a prediction signal output from an inter predictor 321 or an intra predictor 322.

When there is no residual for a processing target block, such as when a skip mode is applied, a predicted block may be used as a reconstructed block. An adder 350 may be referred to as a reconstructor or a reconstructed block generator. A generated reconstructed signal may be used for intra prediction of the next processing target block within a current picture and, as described later, may also be used for inter prediction of the next picture through filtering.

Meanwhile, luma mapping with chroma scaling may be applied in a picture encoding and/or reconstruction process.

A filter 360 may apply filtering to a reconstructed signal to enhance subjective/objective image quality. For example, a filter 360 may apply various filtering methods to a reconstructed picture to generate a modified reconstructed picture, and may store a modified reconstructed picture in a memory 370, specifically in the DPB of a memory 370. Various filtering methods may include, for example, deblocking filtering, a sample adaptive offset, an adaptive loop filter, a bilateral filter, etc. A filter 360 may generate various filtering-related information and transmit it to an entropy encoder 340. The filtering-related information may be encoded by an entropy encoder 340 and output in the form of a bitstream.

A modified reconstructed picture transmitted to a memory 370 may be used as a reference picture in an inter predictor 321. Through this, it may avoid prediction mismatch on an encoder side and a decoder side and may improve encoding efficiency.

The DPB of a memory 370 may store a modified reconstructed picture for use as a reference picture in an inter predictor 321. A memory 370 may store the motion information of a block where motion information within a current picture is derived (or, encoded) and/or the motion information of blocks within an already reconstructed picture. The stored motion information may be transmitted to an inter predictor 321 for use as motion information of a spatial neighboring block or a temporal neighboring block. A memory 370 may store the reconstructed samples of reconstructed blocks in a current picture and transmit stored reconstructed samples to an intra predictor 322.

Meanwhile, a VCM encoder (or a feature/feature map encoder) may have a structure identical/similar to an image/video encoder 300 basically described by referring to FIG. 3 in that it performs a series of procedures such as prediction, transform, quantization, etc. to encode a feature/a feature map. However, a VCM encoder is different from an image/video encoder 300 in that it targets a feature/a feature map for encoding, and accordingly, it may be different in the name of each unit (or, component) (e.g., an image partitioner 310, etc.) and its specific operation details from an image/video encoder 300. The specific operation details of a VCM encoder will be described in detail later.

Decoder

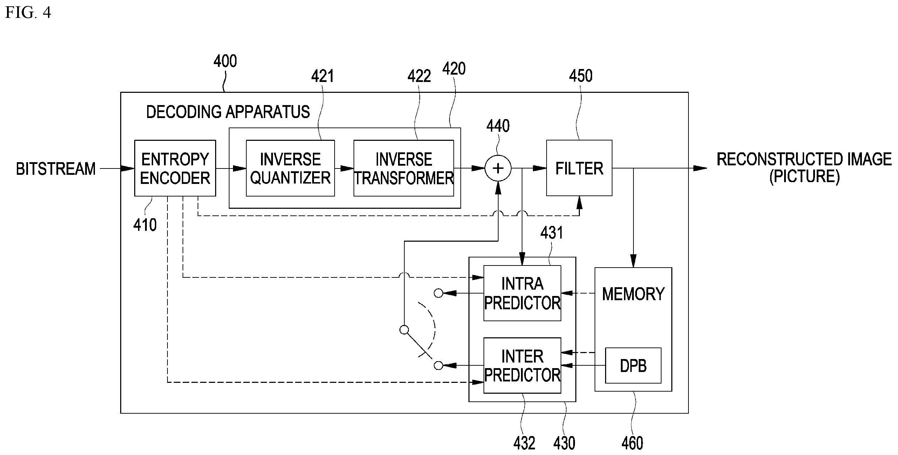

FIG. 4 is a diagram schematically showing an image/video decoder to which embodiments of the present disclosure may be applied.

Referring to FIG. 4, an image/video decoder 400 may include an entropy decoder 410, a residual processor 420, a predictor 430, an adder 440, a filter 450 and a memoery 460. A predictor 430 may include an inter predictor 431 and an intra predictor 432. A residual processor 420 may include a dequantizer 421 and an inverse transformer 422. An entropy decoder 410, a residual processor 420, a predictor 430, an adder 440 and a filter 450 described above may be configured by one hardware component (e.g., a decoder chipset or a processor) according to an embodiment. In addition, a memory 460 may include a decoded picture buffer (DPB) and may be configured by a digital storage medium. A hardware component may further include a memory 460 as an internal/external component.

When a bitstream including video/image information is input, an image/video decoder 400 may reconstruct an image/a video in response to a process in which image/video information is processed in an image/video encoder 300 of FIG. 3. For example, an image/video decoder 400 may derive units/blocks based on block partition-related information obtained from a bitstream. An image/video decoder 400 may perform decoding by using a processing unit applied in an image/video encoder. Accordingly, the processing unit of decoding may be, for example, a coding unit, and a coding unit may be partitioned according to a quad tree structure, a binary tree structure and/or a ternary tree structure from a coding tree unit or a largest coding unit. At least one transform unit may be derived from a coding unit. And, a reconstructed image signal decoded and output through an image/video decoder 400 may be played back through a playback device.

An image/video decoder 400 may receive a signal output from an encoder in FIG. 3 in the form of a bitstream, and a received signal may be decoded through an entropy decoder 410. For example, an entropy decoder 410 may parse a bitstream to derive information necessary for image reconstruction (or picture reconstruction) (e.g., video/image information). The video/image information may further include information on various parameter sets such as an adaptation parameter set (APS), a picture parameter set (PPS), a sequence parameter set (SPS), a video parameter set (VPS), etc. In addition, the video/image information may further include general constraint information. In addition, the image/video information may include the generation method, use method, purpose, etc. of decoded information. An image/video decoder 400 may decode a picture further based on information on a parameter set and/or general constraint information. The signaled/received information and/or syntax elements may be decoded through a decoding procedure and obtained from a bitstream. For example, an entropy decoder 410 may decode information in a bitstream based on a coding method such as exponential Golomb encoding, CAVLC, or CABAC, etc. and may output the values of a syntax

element necessary for image reconstruction and quantized values of a transform coefficient related to a residual. More specifically, a CABAC entropy decoding method may receive a bin corresponding to each syntax element in a bitstream, determine a context model by using the information of a decoding target syntax element, the decoding information of neighboring and decoding target blocks or the information of a symbol/a bin decoded in a previous step, and predict the probability of bin occurrence according to a determined context model and perform arithmetic decoding of a bin to generate a symbol corresponding to the value of each syntax element. In this case, a CABAC entropy decoding method may update a context model by using the information of a decoded symbol/bin for the context model of the next symbol/bin after determining a context model. Among the information decoded by an entropy decoder 410, prediction-related information may be provided to a predictor (an inter predictor 432 and an intra predictor 431), and a residual value which is entropy decoded by an entropy decoder 410, i.e., quantized transform coefficients and related parameter information, may be input to a residual processor 420. A residual processor 420 may derive a residual signal (a residual block, residual samples, a residual sample array). In addition, among the information decoded by an entropy decoder 410, filtering-related information may be provided to a filter 450. Meanwhile, a receiver (not shown) that receives a signal output from an image/video encoder may be additionally constructed as an internal/external element of an image/video decoder 400 or a receiver may be a component of an entropy decoder 410. Meanwhile, an image/video decoder according to the present disclosure may also be referred to as an image/video decoding apparatus, and an image/video decoder may be divided into an information decoder (an image/video information decoder) and/or a sample decoder (an image/video sample decoder) . In this case, an information decoder may include an entropy decoder 410, and a sample decoder may include at least one of a dequantizer 321, an inverse transformer 322, an adder 440, a filter 450, a memory 460, an inter predictor 432 and an intra predictor 431.

A dequantizer 421 may dequantize quantized transform coefficients and output transform coefficients. A dequantizer 421 may reorder quantized transform coefficients in the form of a two-dimensional block. In this case, reordering may be performed based on the coefficient scan order performed in an image/video encoder. A dequantizer 321 may perform dequantization on quantized transform coefficients by using a quantization parameter (i.e., quantization step size information), and may obtain transform coefficients.

An inverse transformer 422 may perform an inverse transform on transform coefficients to obtain a residual signal (a residual block, a residual sample array).

A predictor 430 may perform prediction for a current block and generate a predicted block that includes prediction samples for a current block. A predictor may determine whether intra prediction or inter prediction is applied to a current block based on prediction-related information output from an entropy decoder 410 and may determine a specific intra/inter prediction mode (prediction method).

A predictor 420 may generate a prediction signal based on various prediction methods. For example, a predictor may apply not only intra prediction or inter prediction, but also intra prediction and inter prediction at the same time for prediction for one block. This may be called combined inter and intra prediction (CIIP). In addition, a predictor may be based on an intra block copy (IBC) prediction mode or a palette mode for prediction for a block. An IBC prediction mode or a palette mode may be used for content image/video coding of game such as screen content coding (SCC), etc. IBC basically performs prediction within a current picture, but it may be performed similarly to inter prediction in that it derives a reference block within a current picture. In other words, IBC may use at least one of the inter prediction techniques described in this document. A palette mode may be considered as an example of intra coding or intra prediction. When a palette mode is applied, information related to a palette table and a palette index may be included in image/video information and signaled.

An intra predictor 431 may predict a current block by referring to samples within a current picture. Referenced samples may be located in the neighborhood of a current block or may be located away from a current block according to a prediction mode. In intra prediction, prediction modes may include a plurality of non-directional modes and a plurality of directional modes. An intra predictor 431 may determine a prediction mode applied to a current block by using a prediction mode applied to a neighboring block.

An inter predictor 432 may derive a predicted block for a current block based on a reference block (a reference sample array) specified by a motion vector on a reference picture. In this case, to reduce the amount of motion information transmitted in the inter prediction mode, motion information may be predicted at the block, sub-block, or sample level based on the correlation of motion information between the neighboring block and the current block. Motion information may include a motion vector and a reference picture index. Motion information may further include information on the inter prediction direction (i.e., L0 prediction, L1 prediction, Bi prediction, etc.). In inter prediction, a neighboring block may include spatial neighboring block within the current picture and temporal neighboring block in the reference picture. For example, an inter predictor 432 may construct a motion information candidate list based on neighboring blocks and derive the motion vector and/or reference picture index of a current block based on received candidate selection information. Inter prediction may be performed based on various prediction modes, and prediction-related information may include information indicating an inter prediction mode for a current block.

An adder 440 may generate a reconstructed signal (a reconstructed picture, a reconstructed block, a recon-

structed sample array) by adding an obtained residual signal to a prediction signal (a predicted block, a prediction sample array) output from a predictor (including an inter predictor 432 and/or an intra predictor 431). When there is no residual for a processing target block, such as when a skip mode is applied, a predicted block may be used as a reconstructed block.

An adder 440 may be referred to as a reconstructor or a reconstructed block generator. A generated reconstructed signal may be used for intra prediction of the next processing target block within a current picture, or as described later, may be output through filtering, or may be used for inter prediction of the next picture.

Meanwhile, luma mapping with chroma scaling may be applied in a picture decoding process.

A filter 450 may apply filtering to a reconstructed signal to enhance subjective/objective image quality. For example, a filter 450 may apply various filtering methods to a reconstructed picture to generate a modified reconstructed picture, and may transmit a modified reconstructed picture to a memory 460, specifically to the DPB of a memory 460. Various filtering methods may include, for example, deblocking filtering, a sample adaptive offset, an adaptive loop filter, a bilateral filter, etc.

A (modified) reconstructed picture stored in the DPB of a memory 460 may be used as a reference picture in an inter predictor 432. A memory 460 may store the motion information of a block where motion information within a current picture is derived (or decoded) and/or the motion information of blocks in an already reconstructed picture. The stored motion information may be transmitted to an inter predictor 432 to be used as motion information of a spatial neighboring block or a temporal neighboring block. A memory 460 may store the reconstructed samples of reconstructed blocks in a current picture and transmit them to an intra predictor 431.

Meanwhile, a VCM decoder (or, a feature/feature map decoder) may have a structure identical/similar to an image/video decoder 400 basically described above by referring to FIG. 4 in that it performs a series of procedures such as prediction, inverse transform, dequantization, etc. to decode a feature/a feature map. However, a VCM decoder is different from an image/video decoder 400 in that it targets a feature/a feature map for decoding, and accordingly, it may be different in the name of each unit (or, component) (e.g., DPB, etc.) and its specific operation details from an image/video decoder 400. The operation of a VCM decoder may correspond to the operation of a VCM encoder, and its specific operation details will be described in detail later.

## Feature/Feature Map Encoding Procedure

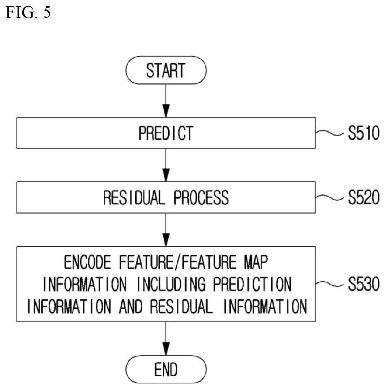

FIG. 5 is a flowchart schematically showing a feature/feature map encoding procedure to which embodiments of the present disclosure may be applied.

Referring to FIG. 5, a feature/feature map encoding procedure may include a prediction procedure S510, a residual processing procedure S520 and an information encoding procedure S530.

A prediction procedure S510 may be performed by a predictor 320 described above by referring to FIG. 3.

Specifically, an intra predictor 322 may predict a current block (i.e., a set of feature elements to be currently encoded) by referring to feature elements in a current feature/feature map. Intra prediction may be performed based on the spatial similarity of feature elements configuring a feature/a feature map. For example, feature elements included in the same region of interest (RoI) within an image/a video may be estimated to have similar data distribution characteristics. Accordingly, an intra predictor 322 may predict a current block by referring to pre-reconstructed feature elements within a region of interest including a current block. In this case, referenced feature elements may be located adjacent to a current block or may be located apart from a current block according to a prediction mode. Intra prediction modes for feature/feature map encoding may include a plurality of non-directional prediction modes and a plurality of directional prediction modes. The non-directional prediction modes may include, for example, prediction modes corresponding to the DC mode and planar mode of an image/video encoding procedure. In addition, directional modes may include, for example, prediction modes corresponding to 33 directional modes or 65 directional modes of an image/video encoding procedure. However, this is just an example, and the type and number of intra prediction modes may be configured/changed in various ways according to an embodiment

An inter predictor 321 may predict a current block based on a reference block (i.e., a set of referenced feature elements) specified by motion information on a reference feature/feature map. Inter prediction may be performed based on the temporal similarity of feature elements configuring a feature/a feature map. For example, temporally continuous features may have similar data distribution characteristics. Accordingly, an inter predictor 321 may predict a current block by referring to pre-reconstructed feature elements of a current feature and a temporally adjacent feature. In this case, motion information for specifying referenced feature elements may include a motion vector and a reference feature/feature map index. Motion information may further include information related to an inter prediction direction (e.g., L0 prediction, L1 prediction, Bi prediction, etc.). For inter prediction, a neighboring block may include a spatial neighboring block existing in a current feature/feature map and a temporal neighboring block existing in a reference feature/feature map. A reference feature/feature map including a reference block and a reference feature/feature map including a temporal neighboring block may be the same or different. A temporal neighboring block may be referred to as a collocated reference block, etc., and a reference feature/feature map including a temporal neighboring block may be referred to as a collocated

feature/feature map. An inter predictor 321 may configure a motion information candidate list based on neighboring blocks and generate information indicating which candidate is used to derive the motion vector and/or reference feature/feature map index of a current block. Inter prediction may be performed based on various prediction modes, and for example, for a skip mode and a merge mode, an inter predictor 321 may use the motion information of a neighboring block as the motion information of a current block. For a skip mode, unlike a merge mode, a residual signal may not be transmitted. For a motion vector prediction (MVP) mode, the motion vector of a neighboring block may be used as a motion vector predictor, and the motion vector of a current block may be indicated by signaling a motion vector difference. A predictor 320 may generate a prediction signal based on various prediction methods in addition to intra prediction and inter prediction described above.

A prediction signal generated by a predictor 320 may be used to generate a residual signal (a residual block, residual feature elements) S520. A residual processing procedure S520 may be performed by a residual processor 330 described above by referring to FIG. 3. And, (quantized) transform coefficients may be generated through a transform and/or quantization procedure for a residual signal, and an entropy encoder 340 may encode information related to (quantized) transform coefficients as residual information in a bitstream S530. In addition, an entropy encoder 340 may encode information necessary for feature/feature map reconstruction, e.g., prediction information (e.g., prediction mode information, motion information, etc.) in addition to residual information in a bitstream.

Meanwhile, a feature/feature map encoding procedure may further include a procedure for generating a reconstructed feature/feature map for a current feature/feature map and a procedure (optional) for applying in-loop filtering to a reconstructed feature/feature map as well as a procedure S530 for encoding information for feature/feature map reconstruction (e.g., prediction information, residual information, partitioning information, etc.) and outputting it in the form of a bitstream.

A VCM encoder may derive (modified) residual feature(s) from quantized transform coefficient(s) through dequantization and inverse transform, and may generate a reconstructed feature/feature map based on prediction feature(s) and (modified) residual feature(s) which are the output of S510. A reconstructed feature/feature map generated in this way may be the same as a reconstructed feature/feature map generated by a VCM decoder. When an in-loop filtering procedure is performed on a reconstructed feature/feature map, a modified reconstructed feature/feature map may be generated through an in-loop filtering procedure on a reconstructed feature/feature map. A modified reconstructed feature/feature map may be stored in a decoded feature buffer (DFB) or a memory and then, used as a reference feature/feature map in the prediction procedure of a feature/feature map. In addition, (in-loop) filtering-related information (parameter) may be encoded and output in the form of a bitstream. Through an in-loop filtering procedure, noise that may occur during feature/feature map coding may be removed, and feature/feature map-based task performance may be improved. In addition, an in-loop filtering procedure may be performed both on an encoder side and a decoder side to guarantee the identity of prediction result, improve the reliability of feature/feature map coding and reduce the amount of data transmission for feature/feature map coding.

Feature/Feature Map Decoding Procedure

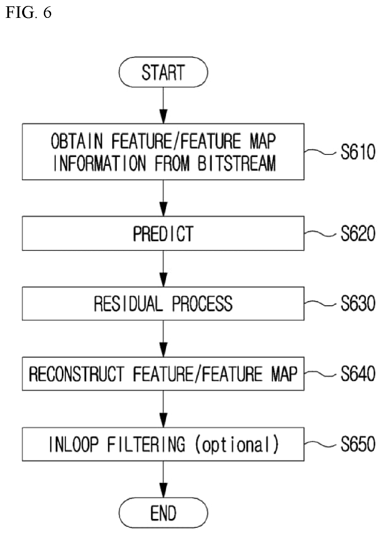

FIG. 6 is a flowchart schematically showing a feature/feature map decoding procedure to which embodiments of the present disclosure may be applied.

Referring to FIG. 6, a feature/feature map decoding procedure may include an image/video information acquisition procedure S610, a feature/feature map reconstruction procedure S620 to S640 and an in-loop filtering procedure S650 for a reconstructed feature/feature map. A feature/feature map reconstruction procedure may be performed based on a prediction signal and a residual signal obtained through the process of inter/intra prediction S620, residual processing S630 and dequantization and inverse transform for a quantized transform coefficient described in the present disclosure. A modified reconstructed feature/feature map may be generated through an in-loop filtering procedure for a reconstructed feature/feature map, and a modified reconstructed feature/feature map may be output as a decoded feature/feature map. A decoded feature/feature map may be stored in a decoded feature buffer (DFB) or a memory and then, used as a reference feature/feature map in an inter prediction procedure when decoding a feature/a feature map. In some cases, the above-described in-loop filtering procedure may be omitted. In this case, a reconstructed feature/feature map may be output as a decoded feature/feature map as it is, and may be stored in a decoded feature buffer (DFB) or a memory and then, used as a reference feature/feature map in an inter prediction procedure when decoding a feature/a feature map.

Feature Extraction and Data Distribution Characteristic

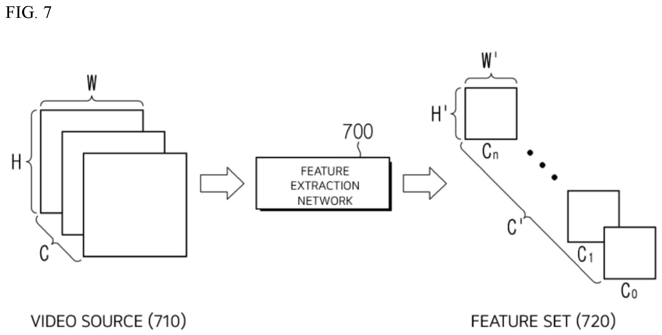

FIG. 7 is a diagram illustrating an example of a feature extraction method using a feature extraction network 700.

Referring to FIG. 7, the feature extraction network 700 may receive a video source (Image/Video, 710) and perform a feature extraction operation to output a feature set 720 of the video source 710. The feature set 720 may include a plurality of features (C0, C1, ..., Cn) extracted from the video source 710 and may be represented as a feature map. Each

of the features (C0, C1, ..., Cn) may include a plurality of characteristic elements and may have different data distribution characteristics.

In FIG. 7, W, H, and C may respectively represent the width, height, and number of channels of the video source 710. Here, the number of channels C of the video source 710 may be determined based on the image format of the video source 710. For example, when the video source 710 has an RGB image format, the number of channels C of the video source 710 may be 3.

In addition, W', H', and C' may respectively represent the width, height, and number of channels of the feature set 720. The number of channels C' of the feature set 720 may be equal to the total number (n+1) of the features (C0, C1, ..., Cn) extracted from the video source 710. In one example, the number of channels C' of the feature set 720 may be greater than the number of channels C of the video source 710.

The properties (W', H', C') of the feature set 720 may vary depending on the properties (W, H, C) of the video source 710. For example, as the number of channels C of the video source 710 increases, the number of channels C' of the feature set 720 may also increase. In addition, the properties (W', H', C') of the feature set 720 may vary depending on the type and property of the feature extraction network 700. For example, when the feature extraction network 700 is implemented as an artificial neural network (e.g., CNN, DNN, etc.), the properties (W', H', C') of the feature set 720 may vary depending on the position of the layer that outputs each feature (C0, C1, ..., Cn).

The video source 710 and the feature set 720 may have different data distribution characteristics. For example, the video source 710 may generally consist of one channel (grayscale image) or three channels (RGB image). The pixels included in the video source 710 may have the same integer value range across all channels and may have non-negative values. In addition, each pixel value may be evenly distributed within a predetermined integer value range. In contrast, the feature set 720 may consist of various numbers of channels (e.g., 32, 64, 128, 256, 512, etc.) depending on the type (e.g., CNN, DNN, etc.) and layer position of the feature extraction network 700. Feature elements included in the feature set 720 may have different ranges of real values for each channel and may also have negative values. In addition, each feature element value may be densely distributed in a specific region within a predetermined real value range.

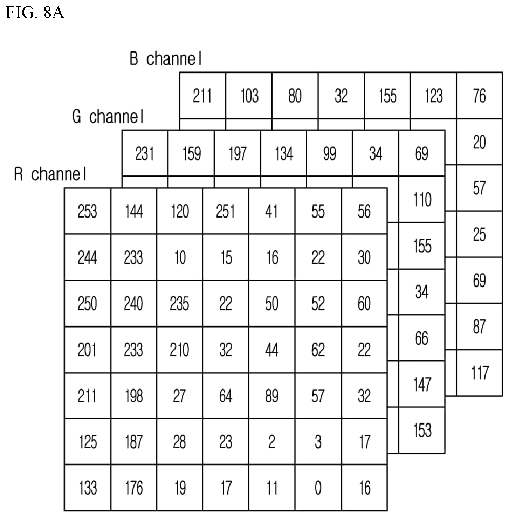

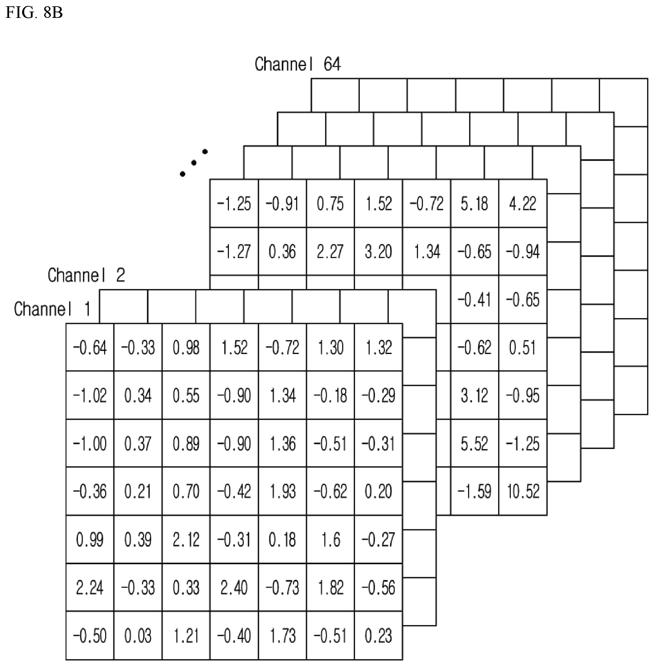

FIG. 8A is a diagram illustrating data distribution characteristics of a video source, and FIG. 8B is a diagram illustrating data distribution characteristics of a feature set.

Referring to FIG. 8A, the video source may consist of a total of three channels-R, G, and B channels (R channel, G channel, B channel)-and each pixel value may have an integer value range from 0 to 255. In this case, the data type of the video source may be represented as an 8-bit integer type.

In contrast, referring to FIG. 8B, the feature set may consist of 64 channels (features), and each feature element value may have a real value range from $-\infty$ to $+\infty$. In this case, the data type of the feature set may be represented as a 32-bit float type.

The feature set may have a feature element value of a float type and may have different data distribution characteristics for each channel (or feature). An example of the data distribution characteristics for each channel of the feature set is shown in Table 1.

[Table 1]

| Channel | Average($\mu$) | Standard derivation($\sigma$) | Max | Min |
|---|---|---|---|---|
| $C_0$ | 10 | 20 | 90 | 60 |
| $C_2$ | 30 | 10 | 70.5 | -70.2 |
| . . . | | | | |
| $C_n$ | 100 | 5 | 115.8 | 80.2 |

Referring to Table 1, the feature set may consist of a total of n+1 channels ($C_0$, $C_1$, ..., $C_n$). The mean value ($\mu$), standard deviation ($\sigma$), maximum value (Max), and minimum value (Min) of feature elements may differ for each channel ($C_0$, $C_1$, ..., $C_n$). For example, the mean value ($\mu$) of the feature elements included in channel 0 (Co) may be 10, the standard deviation ($\sigma$) may be 20, the maximum value (Max) may be 90, and the minimum value (Min) may be 60. In addition, the mean value ($\mu$) of the feature elements included in channel 1 ($C_1$) may be 30, the standard deviation ($\sigma$) may be 10, the maximum value (Max) may be 70.5, and the minimum value (Min) may be -70.2. Furthermore, the mean value ($\mu$) of the feature elements included in channel n ($C_n$) may be 100, the standard deviation ($\sigma$) may be 5, the maximum value (Max) may be 115.8, and the minimum value (Min) may be 80.2.

Quantization of a feature/feature map may be performed based on different data distribution characteristics for each channel, as described above. Feature/feature map data of a float type may be converted into an integer type through quantization.

Meanwhile, due to spatiotemporal similarity between consecutive frames, feature sets and/or channels that are

consecutively extracted from a video source may have identical/similar data distribution characteristics. An example of data distribution characteristics of consecutive feature sets is shown in Table 2.

[Table 2]

| Feture set | Average($\mu$) | Standard derivation($\sigma$) | Max | Min |
|---|---|---|---|---|
| $f_{F0}$ | 50 | 10 | 110.5 | 10.7 |
| $f_{F1}$ | 52 | 11 | 120.5 | 11.5 |
| $f_{F2}$ | 53 | 10 | 115 | 5 |

In Table 2, $f_{F0}$ denotes a first feature set extracted from frame 0 (F0), $f_{F1}$ denotes a second feature set extracted from frame 1 (F1), and fF2 denotes a third feature set extracted from frame 2 (F2).

Referring to Table 2, the consecutive first to third feature sets ($f_{F0}$, $f_{F1}$, $f_{F2}$) may have identical/similar mean values ($\mu$), standard deviations ($\sigma$), maximum values (Max), and minimum values (Min).

In addition, due to spatiotemporal similarity between consecutive frames, corresponding channels within feature sets consecutively extracted from a video source may have identical/similar data distribution characteristics. An example of the data distribution characteristics of corresponding channels of consecutive feature sets is shown in Table 3.

[Table 3]

| Feture set | Average($\mu$) | Standard derivation($\sigma$) | Max | Min |
|---|---|---|---|---|
| $f_{F0C0}$ | 40 | 10 | 110.5 | 10.7 |
| $f_{F1C0}$ | 40 | 11 | 111.5 | 11.5 |

In Table 3, $f_{F0C0}$ denotes the first channel within the first feature set extracted from frame 0 (F0), and $f_{F1C0}$ denotes the first channel within the second feature set extracted from frame 1 (F1).

Referring to Table 3, the first channel ($f_{F0C0}$) of the first feature set and the second channel ($f_{F0C1}$) of the second feature set corresponding thereto may have identical/similar mean values ($\mu$), standard deviations ($\sigma$), maximum values (Max), and minimum values (Min).

Prediction of a feature/feature map may be performed based on, for example, the similarity of data distribution characteristics among the above-described feature sets or channels.

## Transform/inverse-transform

As described above, an image/video encoder may derive a residual block on the basis of a predicted block and derive quantized transform coefficients by applying transform and quantization to the derived residual block. Similarly, a VCM encoder may derive a residual block on the basis of the predicted block (or feature elements) and derive quantized transform coefficients for features/feature maps by applying transform and quantization to the derived residual block. Information (residual information) on the quantized transform coefficients may be included in residual coding syntax, encoded, and then output in the form of a bitstream.

A decoder (an image/video decoder and a VCM decoder) may acquire the information (the residual information) on the quantized transform coefficients from the bitstream and derive the quantized transform coefficients by decoding the information. Also, the decoder may derive the residual block through an inverse quantization/inverse transform on the basis of the quantized transform coefficients. As described above, at least one of quantization/inverse-quantization and/or transform/inverse-transform may be omitted. When transform/inverse-transform is omitted, the transform coefficients may be referred to as "coefficients" or "residual coefficients" or may still be referred to as "transform coefficients" for consistency of expression. Whether to omit transform/inverse-transform may be signaled on the basis of a certain flag, for example, transform_skip_flag. Meanwhile, in VCM, whether to omit transform/inverse-transform may be determined per feature/feature map or per channel.

Transform/inverse-transform may be performed on the basis of transform kernel(s). For example, according to embodiments, a multiple transform selection (MTS) scheme may be applied. In this case, some of multiple transform kernel sets may be selected and applied to a current block. A transform kernel may be referred to by various terms such as transform matrix, transform type, and the like. For example, a transform kernel set may represent a combination of a vertical-direction transform kernel (vertical transform kernel) and a horizontal-direction transform kernel (horizontal transform kernel).

To indicate a transform kernel set for the current block or a feature/feature map, MTS index information, for

example, mts_idx, may be signaled. An example of MTS index information is given in Table 4.

[Table 4]

| mts_idx[x0][y0] | 0 | 1 | 2 | 3 | 4 |
|---|---|---|---|---|---|
| trTypeHor | 0 | 1 | 2 | 1 | 2 |
| trTypeVer | 0 | 1 | 1 | 2 | 2 |

In Table 4, trTypeHor may represent a horizontal-direction transform kernel, and trTypeVer may represent a vertical-direction transform kernel. A trTypeHor/trTypeVer value of 0 may represent DCT2, a trTypeHor/trTypeVer value of 1 may represent DCT7, and a trTypeHor/trTypeVer value of 2 may represent DCT8. However, these are illustrative, and other values may be mapped to other DCT/DST or transform kernels on the basis of predefined rules.

In the present disclosure, MTS-based transform/inverse-transform may be applied as primary transform/inverse-transform, and secondary transform/inverse-transform may be further applied. In this case, a transform on an encoder side may be performed in order of primary transform and secondary transform, and a transform on a decoder side may be performed in order of secondary inverse-transform and primary inverse-transform. According to embodiment, a secondary transform may only be applied to coefficients of a top-left low-frequency region of a coefficient block to which a primary transform is applied. This secondary transform may be referred to as "low frequency non-separable transform (LFNST)." Also, according to an embodiment, the number of coefficients may be reduced as a result of performing the secondary transform. This secondary transform may be referred to as "reduced secondary transform (RST)."

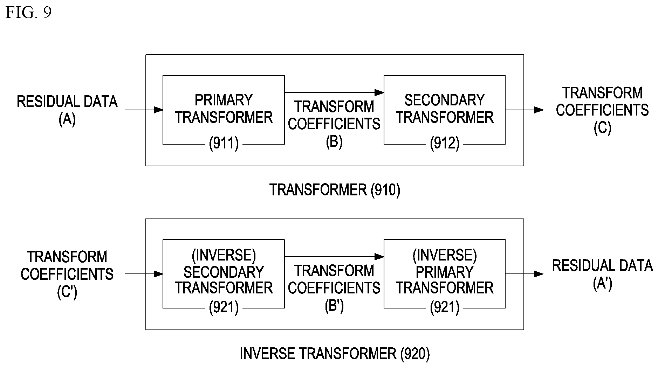

FIG. 9 is a diagram illustrating transform and inverse transform processes to which embodiments of the present disclosure are applicable. In FIG. 9, a transformer 910 may correspond to the transformer 332 of FIG. 3, and an inverse transformer 920 may correspond to the inverse transformer 335 of FIG. 3 or the inverse transformer 422 of FIG. 4.

Referring to FIG. 9, the transformer 910 may include a primary transformer 911 and a secondary transformer 912.

The primary transformer 911 may generate (primary) transform coefficients B by applying a primary transform to residual data A (or residual feature elements). In the present disclosure, the primary transform may be referred to as "core transform." The primary transform may be performed on the basis of an MTS scheme. When an existing MTS is applied, a transform from the spatial domain to the frequency domain is applied to a residual signal (or a residual block) on the basis of DCT type 2, DCT type 7, DCT type 8, etc., such that transform coefficients (or primary transform coefficients) may be generated. Here, DCT type 2, DCT type 7, DCT type 8, etc., may be referred to as "transform type," "transform kernel," or "transform core." However, these are illustrative, and the primary transform may also be applied to MTS kernels other than the foregoing MTS kernels.

The secondary transformer 912 may generate (secondary) transform coefficients C by applying a secondary transform to the (primary) transform coefficients B. The secondary transform is a non-separable transform, for example, the foregoing LFNST or RST. For example, when a 4×4 block is used, the non-separable secondary transform may be performed as follows.

A 4×4 input block X may be represented as in Equation 1 below.

[Equation 1]

$$X = \begin{bmatrix} X_{00} & X_{01} & X_{02} & X_{03} \\ X_{10} & X_{11} & X_{12} & X_{13} \\ X_{20} & X_{21} & X_{22} & X_{23} \\ X_{30} & X_{31} & X_{32} & X_{33} \end{bmatrix}$$

When the input block X is expressed in a vector form, $\vec{X}$ may be represented as in Equation 2 below.

[Equation 2]

$$\vec{X} = [X_{00}, X_{01}, X_{02}, X_{03}, X_{10}, X_{11}, X_{12}, X_{13}, X_{20}, X_{21}, X_{22}, X_{23}, X_{30}, X_{31}, X_{32}, X_{33}]^T$$

In this case, the non-separable secondary transform may be calculated using Equation 3 below.

[Equation 3]

$$\vec{F} = T \cdot \vec{X}$$

Here, $\vec{F}$ is a transform coefficient vector, T is a 16×16 non-separable transform matrix, and · is multiplication of a matrix and a vector.

From the above equation, the 16×1 transform coefficient vector $\vec{F}$ may be derived, and $\vec{F}$ may be reconfigured as a 4×4 block in a scan order (e.g., a horizontal, vertical, diagonal, or predetermined/prestored scan order).

Subsequently, an inverse transformer 820 may include a (inverse) secondary transformer 821 and a (inverse) primary transformer 822.

The (inverse) secondary transformer 921 may generate (primary) (inverse) transform coefficients B' by applying a (inverse) secondary transform to dequantized (secondary) transform coefficients C'. Here, the (inverse) secondary transform may correspond to an inverse process of the secondary transform performed by the transformer 910. The (inverse) secondary transform may be applied to the top-left corner of a coefficient block according to embodiment.

The (inverse) primary transformer 922 may generate residual samples A' by applying a (inverse) primary transform to the (primary) (inverse) transform coefficients B'.

## Quantization/dequantization

As described above, the quantizer 333 of the encoder 300 may derive quantized transform coefficients by applying quantization to transform coefficients, and the dequantizer 334 of the image/video encoder 300 or the dequantizer 421 of the image/video encoder 400 may derive transform coefficients by applying dequantization to quantized transform coefficients. Similarly, a VCM encoder may derive quantized transform coefficients by applying quantization to transform coefficients, and a dequantizer of a VCM encoder or a dequantizer of a VCM decoder may derive transform coefficients by applying dequantization to quantized transform coefficients. In general, a quantization rate may be changed in feature/feature map coding, and the changed quantization rate may be used for adjusting a compression rate. From an implementation perspective, complexity may be taken into consideration to use a quantization parameter (QP) instead of directly using the quantization rate. For example, QPs having integer values of 0 to 63 may be used, and each QP value may correspond to an actual quantization rate. QPs QPY for luma components (luma samples) and QPs QPC for chroma components (chroma samples) may be set differently.

During a quantization process, a transform coefficient C may be input and divided by a quantization rate Qstep, and a quantized transform coefficient C' may be obtained on the basis of the result. In this case, considering computational complexity, the quantization rate may be multiplied by a scale and thereby converted into an integer, and a shift operation of a value corresponding to a scale value may be performed. A quantization scale may be derived from the product of the quantization rate and the scale value. In other words, the quantization scale may be derived in accordance with a QP. The transform coefficient C and the quantization scale may be applied, and the quantized transform coefficient C' may be derived on the basis of the result.

During a dequantization process that is an inverse process of the quantization process, the quantized transform coefficient C' may be multiplied by the quantization rate Qstep, and a restored transform coefficient C'' may be obtained on the basis of the result. In this case, a level scale may be derived from the QP, and the level scale may be applied to the quantized transform coefficient C'. Based on the result, a restored transform coefficient C'' may be derived. The restored transform coefficient C'' may slightly differ from the initial transform coefficient due to loss in the transform and/or quantization process. Therefore, an encoder performs dequantization in the same manner as a decoder.

Meanwhile, an adaptive frequency weighting quantization technique for adjusting quantization strength in accordance with frequency may be applied. The adaptive frequency weighting quantization technique is a method of applying different quantization strengths to frequencies. According to the adaptive frequency weighting quantization technique, a predefined quantization scaling matrix may be used for applying different frequency-specific quantization strengths. In other words, the foregoing quantization/dequantization process may be performed on the additional basis of the quantization scaling matrix. For example, depending on a size of a current block and/or whether a prediction mode applied to the current block to generate a residual signal of the current block is inter prediction or intra prediction, different quantization scaling matrices may be used. A quantization scaling matrix may be referred to as "quantization matrix" or "scaling matrix." The quantization scaling matrix may be defined in advance. Also, for frequency-adaptive scaling, frequency-specific quantization scale information of the quantization scaling matrix may be configured/encoded by an encoder and signaled to a decoder. Frequency-specific quantization scale information may be referred to as "quantization scaling information." The frequency-specific quantization scale information may include scaling list data scaling_list_data. Based on the scaling list data, a (modified) quantization scaling matrix may be derived. Also, the frequency-specific

quantization scale information may include present flag information indicating whether scaling list data exists. On the other hand, when the scaling list data is signaled at an upper level (e.g., a sequence level, a feature-set group level, etc.), information indicating whether the scaling list data is modifiable at a lower level (e.g., a feature set level, a channel level, etc.), etc., may be further included.

Feature quantization/dequantization may be performed on the basis of a certain quantization group. Specifically, a plurality of quantization sections may be set on the basis of data distribution characteristics of a feature set. The set quantization sections may have different data distribution ranges and may be defined as one quantization group. Also, a feature quantization/dequantization computation may be performed by converting data distribution of each channel in a feature set into any one data distribution range.

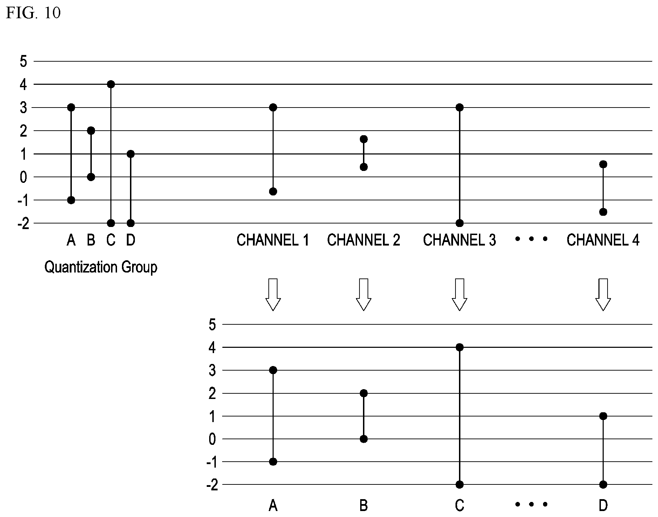

FIG. 10 is a diagram illustrating a quantization group according to an embodiment of the present disclosure.

Referring to FIG. 10, a quantization group may include 4 quantization sections A, B, C, and D having different data distribution ranges. Each of the quantization sections A, B, C, and D in the quantization group may be defined using minimum and maximum values and set on the basis of data distribution characteristics of a current feature/feature map. For example, the quantization sections A, B, C, and D may be set as [-1, 3], [0, 2], [-2, 4], and [-2, 1], respectively.

A VCM encoder may quantize each channel (or feature) in a feature set on the basis of the preset quantization sections A, B, C, and D without additionally calculating maximum and minimum values of feature elements. For example, a first channel (channel 1) may be quantized on the basis of the quantization section A with the most similar data distribution range. A second channel (channel 2) may be quantized on the basis of the quantization section B with the most similar data distribution range. A third channel (channel 3) may be quantized on the basis of the quantization section C with the most similar data distribution range. A fourth channel (channel 4) may be quantized on the basis of the quantization section D with the most similar data distribution range. In this case, the VCM encoder may encode/signal the number, minimum value, and maximum value of quantization sections as feature quantization-related information. Also, the VCM encoder may signal quantization section index information that represents a quantization section used for encoding a current channel (or feature), as feature quantization-related information. Accordingly, it is unnecessary to signal the number of quantization bits per channel and maximum and minimum values of feature elements, reducing the number of transmission bits and improving coding/signaling efficiency.

A VCM decoder may generate the same quantization group as that generated by the VCM encoder on the basis of the number of quantization sections and minimum and maximum values of each section received from the VCM encoder. Alternatively, the VCM decoder may generate a quantization group on the basis of data distribution characteristics of previously reconstructed feature sets. The VCM decoder may dequantize a current feature on the basis of a quantization section identified from the quantization section index information received from the VCM encoder.

An example of a feature quantization operation based on a quantization group is as in Equations 4 and 5.

[Equation 4]

$$F_{norm} = \frac{F_n - min(F_n)}{max(F_n) - min(F_n)}$$

[Equation 5]

$$F_n^{G} = F_n^{norm} \cdot \left(max(F_{G_m}) - min(F_{G_m})\right) + min(F_{G_m})$$

In Equation 4, $F_n$ may be an $n^{th}$ channel (n is an integer greater than or equal to 1) of a feature set

$$F_{set}^{R \times C}.$$

Here, R may be a width of the feature set, and C may be a height of the feature set. Also, $max(F_n)$ may be a maximum value of feature elements in the $n^{th}$ channel, and $min(F_n)$ may be a minimum value of the feature elements in the $n^{th}$ channel.

Referring to Equation 4, the $n^{th}$ channel $F_n$ may be normalized on the basis maximum and minimum values of feature elements in a channel to have feature element values between 0 and 1.

In Equation 5, $F_{n^{norm}}$ may be a normalized n[th] channel of the feature set

$$F_{set}^{R\times C}.$$

Here, R may be a width of the feature set, and C may be a height of the feature set. Also, $max(F_{G_m})$ may be a maximum value of a quantization section $F_{G_m}$ applied to the $n^{th}$ channel $F_n$, and $min(F_{G_m})$ may be a minimum value of the quantization section$F_{G_m}$ applied to the $n^{th}$ channel $F_n$.

Referring to Equation 5, the normalized $n^{th}$ channel $F_{n^{norm}}$ may be quantized on the basis of the maximum value $max(F_{G_m})$ and the minimum value $min(F_{G_m})$ of the quantization section $F_{G_m}$ applied to the $n^{th}$ channel $F_n$.

Meanwhile, for dequantization, quantization-related information may be encoded in a bitstream. According to embodiment, the quantization-related information may include global quantization information, activation function information, the number of quantization bits, and quantization section index information. The global quantization information may indicate whether the number of quantization bits will be set separately for each quantization section or set identically for all quantization sections. The activation function information may indicate a type of activation function applied to a current feature. For example, the activation function information may indicate whether the activation function applied to the current feature is a first activation function involving signaling both maximum and minimum values of each quantization section or a second activation function involving only signaling a maximum value of each quantization section. The number of quantization bits may be set separately for each quantization section on the basis of the foregoing global quantization information or set identically for all the quantization sections. When the number of quantization bits is set identically for all the quantization sections, the number of quantization bits may be signaled only once for all the quantization sections.

In addition, the quantization-related information may further include the number of quantization sections in a quantization group and minimum and maximum values of each quantization section. Here, minimum and maximum values of each quantization section may be adaptively signaled on the basis of the type of activation function. For example, when the activation function applied to the current feature is the first activation function (e.g., leaky rectified linear unit (ReLU)), both minimum and maximum values of each quantization section may be signaled. On the other hand, when the activation function applied to the current feature is the second activation function (e.g., ReLU), a minimum value of each quantization section may be estimated to be 0, and only a maximum value of each quantization section may be signaled.

## Entropy coding

As described above, some or all feature/feature map information may be encoded by the entropy encoder 340, and some or all feature/feature map information may be decoded by the entropy decoder 410. In this case, the feature/feature map information may be encoded/decoded per syntax element like image/video information. In the present disclosure, "information is encoded/decoded" may include "information is encoded/decoded in a way described in this paragraph."

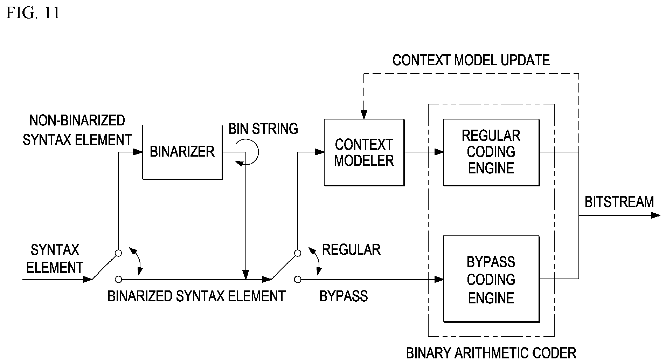

FIG. 11 is a block diagram illustrating context-adaptive binary arithmetic coding (CABAC) for encoding one syntax element.

Referring to FIG. 11, when an input signal is a syntax element rather than a binary value, a CABAC encoding process first involves converting the input signal into a binary value through binarization. When the input signal is already a binary value, the input signal may bypass binarization. Here, each binary number of 0 or 1 constituting a binary value may be referred to as "bin." For example, when a binary string (bin string) is 110 after binarization, each of 1, 1, and 0 may be a single bin. Bin(s) of one syntax element may represent a value of the syntax element.

The binarized bins may be input to a regular coding engine or a bypass coding engine. The regular coding engine may assign a context model for reflecting a probability value to a corresponding bin and may encode the corresponding bin on the basis of the assigned context model. The regular coding engine may encode each bin and then update a probability model for the bin. These coded bins may be referred to as "context-coded bins." The bypass coding engine may omit a procedure for estimating probabilities of the input bins and a procedure for updating probability models applied to the bins after coding. It is possible to increase a coding rate by coding the input bins using a uniform probability distribution (e.g., 50:50) instead of assigning context. These coded bins may be referred to as "bypass bins." A context model may be assigned and updated for each context-coded (regular-coded) bin, and context models may be indicated on the basis of ctxidx or ctxInc. ctxidx may be derived from ctxInc. As a specific example, a context index ctxidx indicating a context model for each of regular-coded bins may be derived as the sum of a context index increment ctxInc and a context index offset

ctxIdxOffset. Here, ctxInc may be derived differently depending on each bin. ctxIdxOffset may be the lowest value of ctxIdx. ctxIdxOffset may generally be determined depending on a type of slice, and a context model for a single syntax element in a slice may be determined/derived from ctxInc.

It may be determined whether to perform encoding through the regular coding engine or the bypass coding engine during the entropy encoding procedure, and coding paths may be switched. As entropy decoding, the same process as entropy encoding may be performed in reverse order.

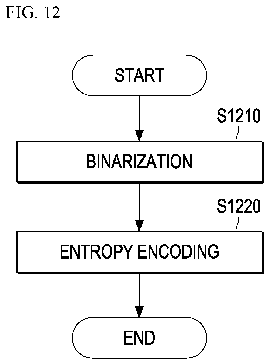

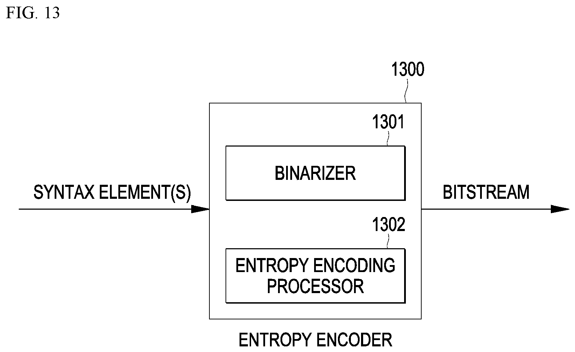

The foregoing entropy coding may be performed, for example, as shown in FIGS. 12 and 13.

FIGS. 12 and 13 are diagrams illustrating an entropy encoding procedure.

Referring to FIGS. 12 and 13 together, an encoder (entropy encoder) may perform an entropy coding procedure for feature/feature map information. The feature/feature map information may include prediction-related information (e.g., inter/intra prediction determination information, intra prediction mode information, inter prediction mode information, etc.), residual information, in-loop filtering-related information, etc., or may include various syntax elements related thereto. This entropy coding may be performed per syntax element. The entropy encoder may be the entropy encoder 340 of the image/video encoder 300 of FIG. 3 described above.

The encoder may binarize a target syntax element (S1310). Here, the binarization may be based on various binarization methods such as a truncated rice binarization process, a fixed-length binarization process, etc., and a binarization method for the target syntax element may be defined in advance. The binarization procedure may be performed by a binarizer 1301 in an entropy encoder 1300.

The encoder may perform entropy encoding on the target syntax element (S1220). The encoder may perform regular coding-based (context-based) encoding or bypass coding-based encoding on a bin string of the target syntax element on the basis of CABAC, context-adaptive variable length coding (CAVLC), etc., and the output may be included in a bitstream. The entropy coding procedure may be performed by an entropy encoding processor 1402 in the entropy encoder 1300. The output bitstream may be transmitted to a decoder via a (digital) storage medium or a network as described above.

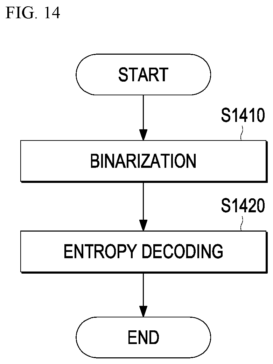

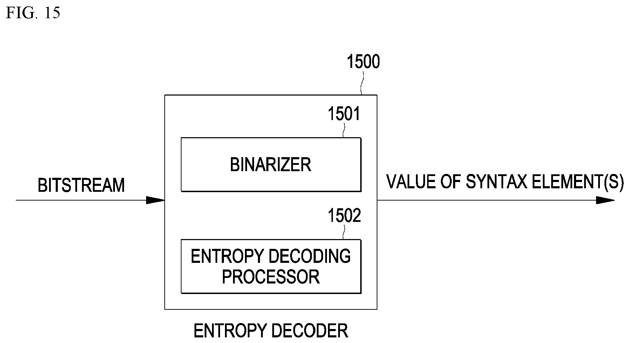

FIGS. 14 and 15 are diagrams illustrating an entropy decoding procedure.

Referring to FIGS. 14 and 15, a decoder (entropy decoder) may decode encoded feature/feature map information. The feature/feature map information may include prediction-related information (e.g., inter/intra prediction determination information, intra prediction mode information, inter prediction mode information, etc.), residual information, in-loop filtering-related information, etc., or may include various syntax elements related thereto. Entropy coding may be performed per syntax element. The entropy decoder may be the entropy decoder 410 of the image/video decoder 400 of FIG. 4 described above.

The decoder may binarize a target syntax element (S1410). Here, the binarization may be based on various binarization methods such as a truncated rice binarization process, a fixed-length binarization process, etc., and a binarization method for the target syntax element may be defined in advance. The decoder may derive available bin strings (bin string candidates) for available values of the target syntax element through the binarization procedure. The binarization procedure may be performed by a binarizer 1501 in an entropy decoder 1500.

The decoder may perform entropy decoding on the target syntax element (S1420). The decoder may sequentially decode and parse bins of the target syntax element from input bit(s) in a bitstream, comparing a derived bin string with available bin strings for the syntax element. When the derived bin string is identical to one of the available bin strings, a value corresponding to the bin string may be derived as a value of the syntax element. Otherwise, the next bit in the bitstream may be further parsed, and then the foregoing procedure may be performed again. This process makes it possible to signal specific information (a specific syntax element) in the bitstream using variable-length bits rather than a start bit and a stop bit of the specific information. In this way, a relatively small number of bits can be allocated to a low value, and overall coding efficiency can be improved.

The decoder may perform context-based decoding or bypass coding-based decoding on bins in the bin string from the bitstream on the basis of an entropy coding technique such as CABAC, CAVLC, or the like. The entropy decoding procedure may be performed by an entropy decoding processor 1502 in the entropy decoder 1500. As described above, the bitstream may include various information for feature/feature map decoding. The bitstream may be transmitted to a decoding apparatus via a (digital) storage medium or a network as described above.

In the present disclosure, a table (syntax table) including syntax elements may be used for indicating information signaling from an encoder to a decoder. The order of syntax elements of the table including syntax elements used in the present disclosure may represent a parsing order of syntax elements from a bitstream. An encoder may generate and encode the syntax table such that syntax elements may be parsed in the parsing order by a decoder, and a decoder may acquire values of the syntax elements by parsing and decoding the syntax elements of the syntax table in the parsing order from the bitstream.

## Coding layers and architecture

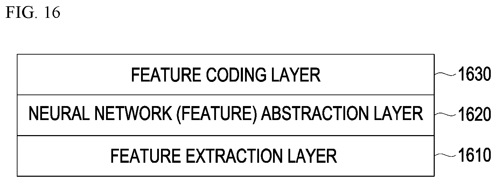

FIG. 16 is a diagram showing an example of a VCM layer architecture.

Referring to FIG. 16, a VCM layer architecture may be composed of a feature extraction layer 1610, a neural network (feature) abstraction layer 1620, and a feature coding layer 1630.

The feature extraction layer 1610 is a layer for extracting features from an input source, and may also include extraction results.

The feature coding layer 1630 is a layer for compressing the extracted features, and may also include compression results.

The neural network (feature) abstraction layer 1620 may abstract information (e.g., information on the extracted features/a feature map) generated by the feature extraction layer 1610 and transmit the abstracted information to the feature coding layer 1630. By abstracting the information, the neural network abstraction layer (NNAL) 1720 may conceal the inside of the feature extraction layer 1610 and provide a consistent feature interface function. Accordingly, even when a compression target changes due to a tool (e.g., CNN, DNN, etc.) change, etc., the feature coding layer 1630 may perform a consistent feature coding procedure. In the present disclosure, an NNAL may also be referred to as "feature abstraction layer."

An interface between the feature extraction layer 1610 and the NNAL 1620 and an interface between the feature coding layer 1630 and the NNAL 1620 may be defined in advance, and operations of the NNAL 1620 may be set to be changeable later.

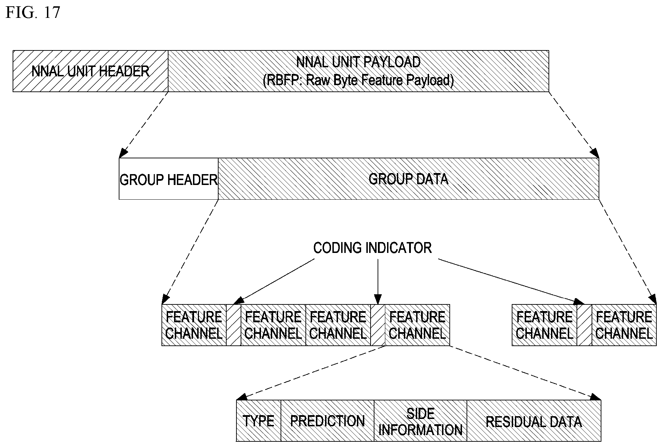

FIG. 17 is a diagram showing an example of a bitstream composed of encoded abstracted features and NNAL information.

A bitstream configured as shown in FIG. 17 may be referred to as "NNAL unit." An NNAL unit may be a single independent feature reconstruction unit. Input features for a single NNAL unit may be extracted from the same layer in a neural network. Accordingly, input features for a single NNAL unit may be forced to have the same characteristic. For example, the same feature extraction method may be applied to input features for a single NNAL unit.

An NNAL unit may include an NNAL unit header and an NNAL unit payload. The NNAL unit header may include all information required for utilizing an encoded feature in accordance with a task. The NNAL unit payload may include abstracted feature information. The NNAL unit payload may include a group header and group data. The group header may include constitution information about feature group data such as information on the temporal order, number, and common attributes of feature channels constituting the feature group. The feature channels may be encoded feature units. The group data may include the plurality of feature channels and coding indicators, and each of the feature channels may include type information, prediction information, side information, and residual information (data). In this case, the type information may indicate an encoding method, and the prediction information may indicate a prediction method. Also, the side information may indicate additional information (e.g., entropy coding, quantization-related information, etc.) required for decoding, and the residual information may include information on encoded feature elements (i.e., a set of feature value information).

In the present disclosure, an encoding method applied in accordance with a purpose of a user or machine and a method of expressing a suitable use and attributes of an encoded bitstream will be described.

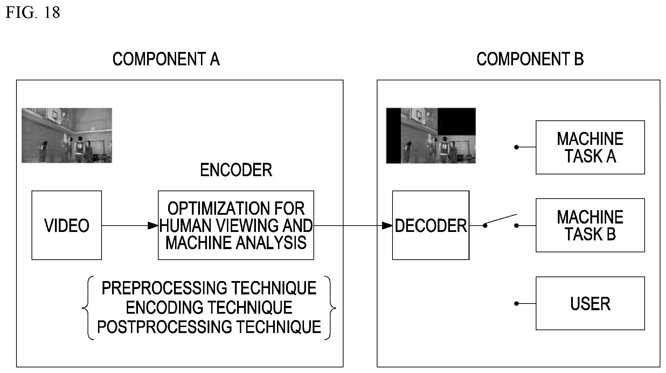

FIG. 18 is a diagram illustrating encoding optimization and the use of an encoded bitstream in accordance with a purpose to which an embodiment of the present disclosure is applicable.

Referring to FIG. 18, component A may represent an example of a side that provides a video. The video may include any bitstream that is encoded in real time or has already been encoded. An encoder of component A may include a function of optimizing input data for the purpose of use. Here, the optimization may be achieved through preprocessing, an encoding process, postprocessing, and the like.

When the purpose of using the video is machine analysis, it may be intended to achieve required performance of a machine task using a small number of bits and resources. In this case, an optimization method may vary depending on attributes of the machine task to be performed.

When the purpose of using the video is human viewing, it may be intended to transmit information to be delivered to a user through the video using a small number of bits and resources. In this case, an optimization method may vary depending on the user's attributes, that is, the user's visual system.

When a target that will receive the video changes or the purpose of receiving the video changes, an optimization method may also change. When it is possible to identify whether a bitstream currently received by the user or machine is optimized, an optimization range, and an optimization method, whether the received bitstream is suitable may be determined to request an optimization method aligned with the purpose.

A method of expressing a purpose, an attribute, and an application range of optimization will be described below. When this method is used, a user or machine can determine the suitability of an optimization method, and in this way, it is possible to efficiently request and use an optimization method aligned with the purpose, thus improving system efficiency.

An expression method defined in the present embodiment may be included in information required for

transmitting an encoded video stream and an encoded video. For example, this information may be transmitted via a supplemental enhancement information (SEI) message.

Tables 5 to 7 below show examples of syntax structures specifying optimization information encoded by an encoder. First, syntax elements that may be signaled in accordance with whether a bitstream is optimized will be described with reference to Table 5.

[Table 5]

| encoder_optimization_info(payloadSize ) { | **Descriptor** |
|---|---|
| optimization_cancel_flag | u(1) |
| if(!optimization_cancel_flag){ | |
| optimization_persistence_flag | u(1) |
| optimization_for_human_viewing_flag | u(1) |
| optimization_for_machine_analysis_flag | u(1) |
| optimistion_type | u(16) |
| } | |
| } | |

Referring to Table 5, encoded optimization information encoder_optimization_info may include an optimization persistence cancelation flag optimization _cancel_flag, an optimization persistence flag optimization_persistence_flag, a first syntax element optimization_for_human_viewing_flag, a second syntax element optimization_for_machine_analysis_flag, and optimization attribute information optimization_type which are syntax elements.

The syntax element optimization_cancel_flag may indicate whether the persistence of optimization being applied is canceled. When the optimization persistence cancelation flag has a value of 1, this may represent that the persistence of previously applied optimization is canceled. When the value is 0, this may represent that optimization_persistence_flag, optimization_for_human_viewing_flag, optimization_for_machine_analysis_flag, and optimization_type are defined thereafter. The value of 0 may represent that optimization and an application range identified from optimization_persistence_flag, optimization_for_human_viewing_flag, optimization_for_machine_analysis_flag, and optimization_type defined thereafter are applicable.

The syntax element optimization_persistence_flag may represent the persistence of optimization indicated by optimization_type. When the value is 1, this may represent that optimization identified from optimization_type is also applicable to a current picture and all follow-up pictures. When the value is 0, this may represent that optimization identified from optimization_type is only applicable to the current picture.

The first syntax element optimization_for_human_viewing_flag may indicate whether the optimization purpose is human viewing. When the value is 1, this may represent that the optimization purpose is human viewing. In other words, the value of 1 may represent that the optimization and the encoded bitstream are intended for human viewing (suitable for human viewing). When the value is 0, this may represent that the optimization purpose is or is not human viewing. In other words, the value of 0 represents that the optimization and the encoded bitstream may or may not be intended for human viewing.

The second syntax element optimization_for_machine_analysis_flag may indicate whether the optimization purpose is machine analysis. When the value is 1, this may represent that the optimization purpose is machine analysis. In other words, the value of 1 may represent that the optimization and the encoded bitstream are intended to perform machine analysis (suitable for machine task). When the value is 0, this may represent that the optimization purpose is or is not machine analysis. In other words, the value of 0 represents that the optimization and the encoded bitstream may or may not be intended for machine analysis.

In various embodiments, the optimization may unintentionally affect encoding quality. For example, the optimization may be performed for machine analysis, but a quality improvement for human viewing may be observed. In this case, optimization_for_machine_analysis_flag may be set to 1, and optimization_for_human_viewing_flag may be set to 0. In this way, it is possible to clearly define what the intended purpose of optimization is. As another example, the optimization may be performed for human viewing, but a quality improvement for machine analysis may be observed. In this case, optimization_for_machine_analysis_flag may be set to 0, and optimization_for_human_viewing_flag may be set to 1. In other words, neither optimization_for_human_viewing_flag nor optimization_for_machine_analysis_flag may be set to 0.

In the present disclosure, each of optimization_for _human_viewing_flag and optimization_for_machine_analysis_flag is referred to as "flag." However, optimization_for_human_viewing_flag and optimization_for_machine_ana-

lysis_flag are not limited thereto and may also be referred to as "indicator."

Referring to Table 5, when optimization_cancel_flag is defined, optimization_persistence_flag, optimization_for_human_viewing_flag, optimization_for_machine_analysis_flag, and optimization_type may be defined through optimization_cancel_flag (i.e., when an optimization_cancel_flag value is 0 (!optimization_cancel_flag)).

Values of optimization_for_human_viewing_flag and optimization_for_machine_analysis_flag may be defined under the following limitations. For example, when the optimization purpose is limited to human viewing and machine analysis, the values may not be 0 simultaneously. In other words, the values of optimization_for_human_viewing_flag and optimization_for_machine_analysis_flag may not be 0 simultaneously. In this case, when the preceding one of optimization_for_human_viewing_flag and optimization_for_machine_analysis_flag has a value of 0, the following one has a value of 1, and thus it is unnecessary to encode the value in the bitstream. A decoder or a receiving side may process the value as 1. Tables 6 and 7 below may show examples thereof.

[Table 6]

| encoder_optimization_info(payloadSize ) { | **Descriptor** |
|---|---|
| oplimization_cancel_flag | u(1) |
| if(!optimization_cancel_flag){ | |
| optimization_persistence_flag | u(1) |
| optimization_for_hurnan_viewing_flag | u(1) |
| if(optimization_for_human_viewing_flag){ | |
| optimization_for_machine_analysis_flag | u(1) |
| } | |
| optimization_type | u(16) |
| } | |
| } | |

[Table 7]

| encoder_optimization_info(payloadSize) { | **Descriptor** |
|---|---|
| optimization_cancel_flag | u(1) |
| if(!optimization_cancel_flag){ | |
| optimization_persistence_flag | u(1) |
| optimization_for_human_viewing_flag | u(1) |
| if{optimization_for_human_ viewing_flag){ | |
| optimization_for_machine_analysis_flag | u(1) |
| } | |
| optimization_type | u(16) |
| } | |
| } | |

According to Table 6 above, when optimization_for_human_viewing_flag has a value of 1, optimization_for_machine_analysis_flag may be defined, and when optimization_for_human_viewing_flag has a value of 0, optimization_for_machine_analysis_flag may be processed as a value of 1. In other words, the encoder side does not need to encode the optimization_for_machine_analysis_flag value in the bitstream, and the decoder side can infer the value as 1 without parsing it.

As another example, according to Table 7 above, when optimization_for_machine_analysis_flag has a value of 1, optimization_for_human_viewing_flag may be defined, and when optimization_for _machine_analysis_flag has a value of 0, optimization_for_human_viewing_flag may be processed as a value of 1. In other words, the encoder side does not need to encode the optimization_for_human_viewing_flag value in the bitstream, and the decoder side can infer the value as 1 without parsing it.

Optimization_type may represent an attribute (or type) of an optimization method. Optimization attributes identified from optimization_type may be represented as in Table 8 below.

[Table 8]

| Value | Interpretation |
|---|---|
| optimization_type == 0 | May be used as determined by the application |
| optimization_type > 0 && (optimization_type & optim0x01) == 0 | No object-based optimization |
| (optimization_type & 0x01) != 0 | With object-based optimization |
| optimization_type > 0 && (optimization_type & 0x02) == 0 | No temporal resampling optimization |
| (optimization_type & 0x02) != 0 | With temporal resampling optimization |
| optimization type > 0 && (optimization_type & 0x04) == 0 | No spatial resampling optimization |
| (optimization_type & 0x04) != 0 | With spatial resampling optimization |
| optimization_type > 0 && (optimization_type & 0x08) == 0 | No temporal quality optimization |
| (optimization_type & 0x08) != 0 | With temporal quality optimization |
| optimization_type > 0 && (optimization_type & 0x10) == 0 | No spatial quality optimization |
| (optimization_type & 0x10) != 0 | With spatial quality optimization; the pictures for which this SEI message persists have been pre-processed or encoded to reduce unnecessary information or improve the quality of necessary information (e.g., to reduce the amount of noise and remove speckles at the picture-level) |
| (optimization_type & 0x20) == 0 | No optimization for color vision deficiency |
| (optimization_type & 0x20) != 0 | With color vision deficiency optimization; the pictures for which this SEI message persists have been pre-processed or encoded to reduce unnecessary information for individuals with color blindness or to enhance their ability to distinguish colors (e.g., transforming indistinguishable colors into distinguishable ones or removing unperceivable color information) |

According to Table 8, an attribute of the optimization method may be defined depending on an optimization_type value. Optimization attributes defined in Table 8 are illustrative, and a corresponding structure may be used to define new optimization attributes. Optimization attributes and methods may be identified to include only some of the optimization attributes defined in Table 8 rather than all the optimization attributes, or may include optimization attributes and methods not defined in Table 8.

Table 9 below may show an example of optimization methods that may perform the same functions as those shown in Table 8 but are expressed in a different way. In other words, Table 9 is another example of expressing a plurality of optimization methods using a bitmask for optimization_type.

[Table 9]

| Bitmask | Interpretation |
|---|---|
| 0x01 | Object-based optimization; the pictures for which this SEI message persists have been pre-processed or encoded so that detected objects in the pictures are optimized with respect to other parts of the pictures for the indicated optimization purposes |
| 0x02 | Temporal resampling optimization |
| 0x04 | Spatial resampling optimization |
| 0x08 | Temporal quality optimization |

(continued)

| Bitmask | Interpretation |
|---|---|
| 0x10 | Spatial quality optimization; the pictures for which this SEI message persists have been pre-processed or encoded to reduce unnecessary information or improve the quality of necessary information (e.g., to reduce the amount of noise and remove speckles at the picture-level) |
| 0x20 | Color vision deficiency optimization; the pictures for which this SEI message persists have been pre-processed or encoded to reduce unnecessary information for individuals with color blindness or to enhance their ability to distinguish colors (e.g., transforming indistinguishable colors into distinguishable ones or removing unperceivable color information) |

According to Table 9, since color vision deficiency optimization is for human viewing, a corresponding value may be defined only when optimization_for_human_viewing_flag has a value of 1.

As another example, Table 10 below shows an embodiment of syntax for additionally expressing necessary additional information depending on optimization attributes.

[Table 10]

| encoder_optimization_info(payloadSize ) { | **Descriptor** |
|---|---|
| oplimization_cancel_flag | u(1) |
| if(!optimization_cancel_flag ){ | |
| optimization_persistence_flag | u(1) |
| optimization_for_human_viewing_flag | u(1) |
| optimization_for_machirie_analysis_flag | u(1) |
| optimization_type | u(16) |
| if(!optimizationForCVDFlag) | |
| { | |
| CVD_type_idc | u(3) |
| CVD_oplimization_method_idc | |
| } | |
| } | |
| } | |

According to Table 10, additional information may include a first optimization purpose flag optimizationForCVD-Flag, color vision deficiency type identification information CVD_type_idc, and color vision deficiency optimization method identification information CVD_optimization_method_idc. When optimizationForCVDFlag is true (or has a value of 1), CVD_type_idc and CVD_optimization_method_idc may be defined.

The variable optimizationForCVDFlag may indicate whether optimization_type includes color vision deficiency optimization. When optimization_type includes color vision deficiency optimization, optimizationForCVDFlag has a value of 1 and may be derived from "optimizationForCVDFlag = ((optimization_type & 0x20) > 0 ? 1 : 0." In other words, an optimizationForCVDFlag value may be derived from the values defined in Table 9.

The syntax element CVD_type_idc may represent identification information for identifying a type of color vision deficiency. Table 11 below may show an example of types of color vision deficiency.

[Table 11]

| CVD_type_idc | CVD type |
|---|---|
| 001 | Protanomaly, Red-deficiency |
| 010 | Protanopy, Red-deficiency |
| 011 | Deuteranomaly, Green-deficiency |
| 100 | Deuteranopy, Green-deficiency |

(continued)

| CVD_type_idc | CVD type |
|---|---|
| 101 | Tritanomaly, Blue-deficiency |
| 110 | Tritanopy, Blue-deficiency |
| 111 | Complete color blindness |

CVD_optimization_method_idc may represent identification information indicating a type of optimization method for color vision deficiency. Table 12 below may show an example of types of optimization methods for color vision deficiency.

[Table 12]

| CVD_optimization method_idc | Description |
|---|---|
| 0 | Reducing the colors of the video to fit into the perceptible color space of the user |
| 1 | Transforming the colors of the video to make them distinguishable for the user |

Table 13 below may show an example of optimization methods that may perform the same functions as those shown in Table 12 but are expressed in a different way. In other words, Table 13 is another example of expressing types of optimization methods using a bitmask for optimization_type.

[Table 13]

| Bitmask | Interpretation |
|---|---|
| 0x01 | Reducing the colors of the video to fit into the perceptible color space of the user |
| 0x02 | Transforming the colors of the video to make them distinguishable for the user |

Optimization for color vision deficiency may be included in spatial quality. In this case, unlike in Tables 8 and 9, optimization_type for color vision deficiency optimization may not be defined. Table 14 below may show an example of expressing optimization attributes and purposes without defining optimization attribute information.

[Table 14]

| Value | Interpretation |
|---|---|
| optimization type = 0 | May be used as determined by the application |
| optimization_type > 0 && (optimization_type & optim0x01) == 0 | No object-based optimization |
| (optimization_type & 0x01) != 0 | With object-based optimization |
| optimization_type > 0 && (optimization_type & 0x02) = 0 | No temporal resampling optimization |
| (optimization_type & 0x02) != 0 | With temporal resampling optimization |
| optimization_type > 0 && (optimization_type & 0x04) = 0 | No spatial resampling optimization |
| (optimization_type & 0x04) != 0 | With spatial resampling optimization |

(continued)

| Value | Interpretation |
|---|---|
| optimization_type > 0 && (optimization_type & 0x08) = 0 | No temporal quality optimization |
| (optimization_type & 0x08) != 0 | With temporal quality optimization |
| optimization_type > 0 && (optimization_type & 0x10) = 0 | No spatial quality optimization |
| (optimization_type & 0x10) != 0 | With spatial quality optimization; the pictures for which this SEI message persists have been pre-processed or encoded to reduce unnecessary information or improve the quality of necessary information (e.g., to reduce the amount of noise and remove speckles at the picture-level) |

Table 15 below may show an example of optimization methods that may perform the same functions as those shown in Table 16 but are expressed in a different way. In other words, Table 15 is another example of expressing a plurality of optimization attributes and purposes using a bitmask.

[Table 15]

| Bitmask | Interpretation |
|---|---|
| 0x01 | Object-based optimization; the pictures for which this SEI message persists have been pre-processed or encoded so that detected objects in the pictures are optimized with respect to other parts of the pictures for the indicated optimization purposes |
| 0x02 | Temporal resampling optimization |
| 0x04 | Spatial resampling optimization |
| 0x08 | Temporal quality optimization |
| 0x10 | Spatial quality optimization; the pictures for which this SEI message persists have been pre-processed or encoded to reduce unnecessary information or improve the quality of necessary information (e.g., to reduce the amount of noise and remove speckles at the picture-level) |

As another embodiment, Table 16 below shows an example of a syntax structure for additionally expressing necessary additional information depending on optimization attributes.

[Table 16]

| encoder_optimization_info(payloadSize ) { | **Descriptor** |
|---|---|
| **optimization_cancel_ flag** | u(l) |
| if( !optimization_cancel_flag ){ | |
| **optimization_persistence_flag** | u(1) |
| **optimization_for_human_viewing_flag** | u(1) |
| **optimization_for_machine_analysis_flag** | u(1) |
| **optimization_type** | u(16) |
| if(spatialQualityOptimization_flag ) | |
| { | |
| **spatial_quality_method_idc** | |
| } | |
| } | |

(continued)

| } | |
|---|---|

According to Table 16, additional information may include a second optimization purpose flag spatialQualityOptimization_flag and spatial quality optimization method identification information spatiai_quality_method_idc. When spatialQualityOptimization_flag is true (or has a value of 1), spatiai_quality_method_idc may be defined.

The variable spatialQualityOptimization _flag may indicate whether optimization_type includes spatial quality optimization. When optimization_type includes spatial quality optimization, spatialQualityOptimization_flag has a value of 1 and may be derived from "spatialQualityOptimization_flag = ((optimization_type & 0x10) > 0 ? 1 : 0."

When optimization_type includes spatial quality optimization, the syntax element spatiai_quality_method_idc may represent identification information indicating a type of optimization method. Table 17 below may show an example of types of spatial quality optimization methods.

[Table 17]

| Spatial_quality_method_idc | Description |
|---|---|
| 000 | De-noising filter |
| 001 | Edge preserving filter |
| 010 | Image enhancement processing |
| 011 | Filter bank (array of bandpass filters) |
| 100 | Color vision deficiency optimization |

Table 17 shows an example of defining one optimization method per identifier, and purposes of color vision deficiency activation may be specified and described as shown in Table 18 below.

[Table 18]

| Spatial_quality_method_idc | Description |
|---|---|
| 000 | De-noising filter |
| 001 | Edge preserving filter |
| 010 | Image enhancement processing |
| 011 | Filter bank (array of bandpass filters) |
| 100 | Color vision deficiency optimization; Reducing the colors of the video to fit into the perceptible color space of the user |
| 101 | Color vision deficiency optimization; Transforming the colors of the video to make them distinguishable for the user |

According to Table 18, the identifier "100" may represent that color vision deficiency optimization is intended to reduce colors of a video to fit into a perceptible color space of a user. Also, the identifier "101" may represent that color vision deficiency optimization is intended to transform colors of a video to make the colors distinguishable for a user.

Table 19 below may show an example of optimization methods that may perform the same functions as those shown in Table 17 but are expressed in a different way, and Table 20 below may show an example of optimization methods that may perform the same functions as those shown in Table 18 but are expressed in a different way. In other words, Table 19 is another example of expressing a plurality of optimization methods using a bitmask, and Table 20 may be another example of expressing a plurality of optimization methods/purposes using a bitmask.

[Table 19]

| Bitmask | Interpretation |
|---|---|
| 0x01 | De-noising filter |
| 0x02 | Edge preserving filter |
| 0x04 | Image enhancement processing |

(continued)

| Bitmask | Interpretation |
|---|---|
| 0x08 | Filter bank (array of bandpass filters) |
| 0x10 | Color vision deficiency optimization |

[Table 20]

| Bitmask | Interpretation |
|---|---|
| 0x01 | De-noising filter |
| 0x02 | Edge preserving filter |
| 0x04 | Image enhancement processing |
| 0x08 | Filter bank (array of bandpass filters) |
| 0x10 | Color vision deficiency optimization; Reducing the colors of the video to fit into the perceptible color space of the user |
| 0x20 | Color vision deficiency optimization; Transforming the colors of the video to make them distinguishable for the user |

As various embodiments, Tables 21 to 23 below show embodiments of defining optimization and encoding attributes for a set of information defined in an encoded bitstream such as a sequence parameter set and a picture parameter set. Specifically, Tables 21 and 23 may show examples of optimization and encoding attributes defined for a sequence parameter set, and Table 22 may show an example of optimization and encoding attributes defined for a picture parameter set.

[Table 21]

| seq_parameter_set_rbsp( ) { | Descriptor |
|---|---|
| color_vision_deficiency_optimization_flag | u(1) |
| } | |

[Table 22]

| picture_parameter_set_rbsp( ) { | Descriptor |
|---|---|
| color_vision_deficiency_optimization_flag | u(1) |
| } | |

[Table 23]

| seq_parameter_set_rbsp( ) { | Descriptor |
|---|---|
| optimization_idc | u(1) |
| } | |

According to Table 21, a color vision deficiency optimization flag color_vision_deficiency_optimization_flag which is a syntax element may be included in sequence parameter set information seq_parameter_set_rbsp. According to Table 22, a color vision deficiency optimization flag color_vision_deficiency_optimization_flag may be included in picture parameter set information picture_parameter_set_rbsp.

The syntax element color_vision_deficiency_optimization_flag may indicate whether an encoded bitstream is optimized for the color-vision-impaired. When the value is 1, this may represent that the encoded bitstream is optimized for the color-vision-impaired. When the value is 0, this may represent that the encoded bitstream is not optimized for the color-vision-impaired.

Table 21 above shows an example of defining color_vision_deficiency_optimization_flag in a sequence parameter set, and Table 22 above shows an example of defining color_vision_deficiency_optimization_flag in a picture

parameter set.

The foregoing syntax elements may be defined in locations other than those defined in Tables 21 to 23 (e.g., profile_tier_level, decoding capability information, etc.).

According to Table 23, sequence parameter set information may include optimization target identification information optimization_ide which is a syntax element.

optimization_ide is identification information indicating an optimization target of an encoded bitstream, and examples of the value may be represented as in Table 24 below.

[Table 24]

| optimization_idc | Description |
|---|---|
| 00 | For machine analysis |
| 01 | For normal color vision |
| 11 | For abnormal color vision |

According to Table 24, when the optimization target identification information has a value of "00," this may represent that the bitstream is optimized for machine analysis. When the value is "01," this may represent that the bitstream is optimized for people with a normal visual system. When the value is "11," this may represent that the bitstream is optimized for people with a different visual system from a normal visual system such as color vision deficiency. Values other than the defined optimization targets and methods may be defined.

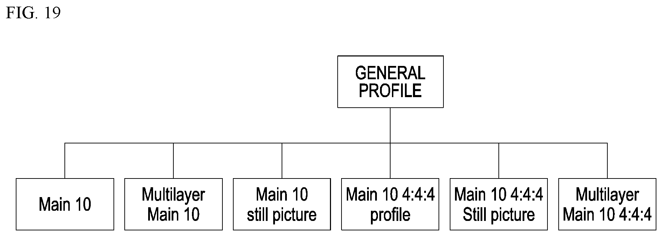

FIG. 19 is a diagram showing an example of a profile definition structure.

In FIG. 19, a profile may specify constraints and purposes of a coding tool (algorithm) used for video encoding/decoding. Each profile is independently defined and may be distinguished by an identifier indicating the profile. For example, a profile identifier of Main 10 may be defined as 10, and a profile identifier of Multilayer main 10 may be defined as 17.

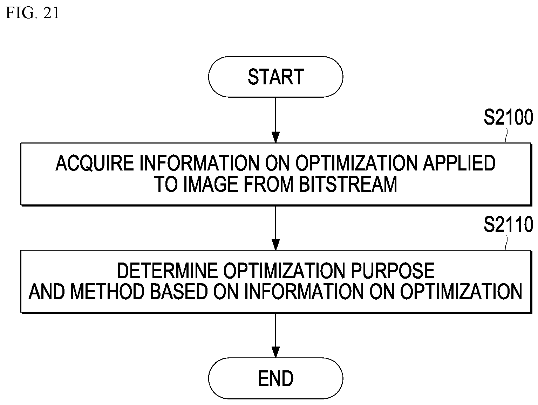

Information on optimization and encoding attributes may be added to a set of information and the profile defined as in FIG. 19 or may be defined in a separate profile. For example, in the case of abnormal color vision (e.g., color vision deficiency), color information perceptible to the user may differ from that of users with normal color vision. Therefore, an encoder may allocate a larger number of bits to color information perceptible to users with abnormal color vision or may convert color information for information delivery. Depending on values of optimization_ide, color_vision_deficiency_optimization_flag, and general_profile_idc defined in the present embodiment, an applied encoding method and coding tool may be defined. As an example, when the color vision deficiency optimization flag has a value of 1, the optimization target identification information has a value of 11, or the profile is intended for abnormal color vision, the encoder may apply differential quality to U and V components in the YUV color space during encoding, depending on a type and degree of color vision deficiency. As another example, the encoder may reduce or remove information that is imperceptible to users with abnormal color vision or may convert the information into perceptible information. Since this operation is unnecessary for users with normal color vision, a corresponding coding tool may be unnecessary for users with normal color vision. As described above, an applied coding tool may vary depending on an optimization target, and thus distinguishment may be required in a profile step. For example, a profile that corresponds to Main 10 profile and is intended for abnormal color vision (e.g., someone with color vision deficiency) (Main 10 abnormal color vision) may be separately defined. As another embodiment, profiles defined in FIG. 21 other than Main 10 profile may likewise be used to additionally define a profile for specific optimization and a purpose. In this case, a definition of an added profile may be necessary as shown in Table 25 below.

[Table 25]

| seq_parameter_set_rbsp( ) { | Descriptor |
|---|---|
| general_profile_idc | u(8) |
| } | |

According to Table 25, gener_profile_idc may be defined in a sequence parameter set.

Depending on values of optimization_ide and color_vision_deficiency_optimizatio_flag defined in the present embodiment, an applicable and usable coding tool and encoding method may vary.

Syntax elements that represent an applied optimization method/attribute individually will be described below.

Tables 26 and 27 below show examples of syntax structures specifying optimization information including syntax elements that express optimization attributes and application ranges individually.

[Table 26]

| encoder_optimization_info(payloadSize ) { | Descriptor |
|---|---|
| optimization_cancel_flag | u(1) |
| if(!optimization_cancel_flag){ | |
| optimization_persistence_flag | u(1) |
| optimization_for_human_viewing_flag | u(1) |
| optimization_for_machine_analysis_flag | u(1) |
| object_based_flag | u(16) |
| temporal_resampling_flag | u(1) |
| spatial_resampling_flag | u(1) |
| temporal_quality_flag | u(1) |
| spatial_quality_flag | u(1) |
| color_vision_deficiency_flag | u(1) |
| if(color_vision_deficiency_flag) | |
| { | |
| CVD_type_idc | u(3) |
| CVD_optimization_method_idc | |
| } | |
| if(temporal_resampling_flag) | |
| { | |
| resampling_info | ue(v) |
| | |
| } | |
| if(spatial_quality_flag) | |
| { | |
| spatiai_quality_method_idc | ue(v) |
| } | |
| } | |
| } | |

According to Table 26, encoded optimization information may include syntax elements specifying optimiza-

tion_cancel_flag, optimization_for_human_viewing_flag, optimization_for_machine_analysis_flag, and optimization_type.

Syntax elements specifying optimization_type may include an object-based optimization flag bject_based_flag, a temporal resampling optimization flag temporal_resampling_flag, a spatial resampling optimization flag spatial_resampling_flag, a temporal quality optimization flag temporal_quality_flag, a spatial quality optimization flag spatial_quality_flag, and a color vision deficiency optimization flag color_vision_deficiency_flag.

object_based_flag may indicate whether object-based optimization is applied. When the value is 1, this represents that object-based optimization (e.g., a preprocessing and encoding process) is applied, and when the value is 0, this represents that object-based optimization is not applied. For example, when an object-based optimization application flag has a value of 1, this may represent that optimization is performed for the performance of perceiving an object to be perceived.

temporal_resampling_flag may indicate whether optimization employing temporal resampling is applied. When the value is 1, this may represent that optimization employing temporal resampling is applied, and when the value is 0, this may represent that optimization employing temporal resampling is not applied. Here, temporal resampling may include both downsampling and upsampling.

spatial_resampling_flag may indicate whether optimization employing spatial resampling is applied. When the value is 1, this may represent that optimization employing spatial resampling is applied, and when the value is 0, this may represent that optimization employing spatial resampling is not applied. Here, spatial resampling may include both downsampling and upsampling.

temporal_quality_flag may indicate whether temporally differential quality is applied. When the value is 1, this may represent that temporally differential quality is applied, and when the value is 0, this may represent that temporally differential quality is not applied. For example, different quantization may be applied to each temporal layer.

spatial_quality_flag may indicate whether spatial quality optimization is applied. Here, spatial quality optimization may involve removing unnecessary information or enhancing necessary information. When the value is 1, this may represent that spatial quality optimization is applied, and when the value is 0, this may represent that spatial quality optimization is not applied.

color_vision_deficiency_flag may indicate whether optimization for people with abnormal color vision (or vision) or poor visual perception is applied. For example, color_vision_deficiency_flag may indicate whether optimization for people with color vision deficiency is applied. When the value is 1, this may represent that optimization for people with color vision deficiency is applied, and when the value is 0, this may represent that optimization for people with color vision deficiency is not applied.

Referring to Table 26, when color_vision_deficiency_flag is true (or has a value of 1), color vision deficiency type identification information CVD_type_idc and color vision deficiency optimization method identification information CVD_optimization_method_idc may be defined. For example, CVD_type_idc may be indicated as in Table 11 above, and CVD_optimization_method_idc may be indicated as in Table 12 above. In addition to CVD_type_idc and CVD_optimization_method_idc, information indicating a type and degree of a user's color vision deficiency may be defined together, and detailed information of an applied optimization method (e.g., a transform coefficient, etc.) may also be defined.

Also, when temporal_resampling_flag is true (or has a value of 1), resampling information resampling_info representing a temporal resampling optimization method and detailed information may be defined. This resampling_info may represent original temporal resolution and interframe intervals corresponding to the original temporal resolution. For example, in the case of downsampling, resampling_info may indicate the number of frames omitted between encoded frames. As another example, in the case of upsampling, resampling_info may indicate how many frames are added between original frames. In other words, resampling_inf may indicate the number of frames added between original frames.

Further, when spatial_quality_flag is true (or has a value of 1), spatiai_quality_method_idc may be defined. In the case of optimization for color vision deficiency, this information may be included in spatial quality. This may be represented as in Tables 17 to 20. In this case, an applied optimization attribute and purpose may be expressed through encoding of detailed optimization information.

According to various embodiments, Table 27 may show an example of a syntax structure specifying an embodiment of defining color_vision_deficiency_flag when optimization_for_human_viewing_flag is true.

[Table 27]

| encoder_optimization_info(payloadSize ) { | Descriptor |
|---|---|
| optimization_cancel_flag | u(1) |
| if(!optimization_cancel_flag){ | |
| optimization_persistence_flag | u(1) |
| optimization_for_human_viewing_flag | u(1) |
| optimization_for_machine_analysis_flag | u(1) |
| object_based_flag | u(16) |
| temporal_resampling_flag | u(1) |
| spatial_resampling_flag | u(1) |
| temporal_quality_flag | u(1) |
| spatial_quality_flag | u(1) |
| if(optimization_for_human_viewing_flag){ | |
| color_vision_deficiency_flag | u(1) |
| } | |
| if(color_vision_deficiency_flag) | |
| { | |
| CVD_type_idc | u(3) |
| CVD_optimization_method_idc | ue(v) |
| } | |
| if(temporal_resampling_flag) | |
| { | |
| resampling_info | ue(v) |
| } | |
| if(spatial_quality_flag) | |
| { | |
| spatiai_quality_method_idc | ue(v) |
| } | |
| } | |
| } | |

According to Table 27, when optimization_for_human_viewing_flag is true, that is, when the optimization purpose is human viewing, color_vision_deficiency_flag may be defined.

An embodiment in which information related to color vision deficiency optimization is expressed using a separate message will be described below.

Table 28 below shows an example of a syntax structure specifying information related to color vision deficiency optimization color_vision_deficiency_optimization_info. In this way, the other optimization methods defined above may also be defined in a separate form.

[Table 28]

| color_vision_deficiency_optimization_info(payloadSize ) { | Descriptor |
|---|---|
| optimization_cancel_flag | u(1) |
| if(!optimization_cancel_flag){ | |
| optimization_persistence_flag | u(1) |
| CVD_type_idc | u(3) |
| CVD_optimization_method_idc | ue(v) |
| } | |
| } | |

According to Table 28, when optimization_cancel_flag is false (or has a value of 0), optimization_persistence_flag, CVD_type_idc, and CVD_optimization_method_idc may be defined. Definitions of these syntax elements may be the same as described above in Tables 5 to 15.

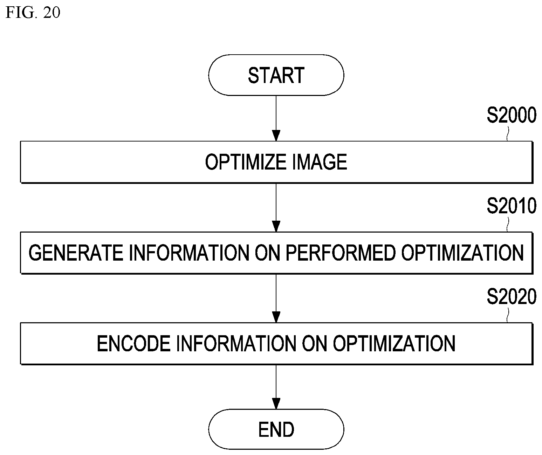

FIG. 20 is a diagram illustrating an encoding method according to an embodiment of the present disclosure. As an embodiment, the encoding method of FIG. 20 may be performed by an encoding apparatus (or encoder).

Referring to FIG. 20, the encoder may optimize a video (S2000). Specifically, the encoder may perform optimization such as preprocessing, encoding, postprocessing, and/or the like of input data. This optimization may be performed to align with the purpose of the video.

The encoder may generate information on the performed optimization (S2010). The information on the optimization may include first information indicating an optimization purpose and second information indicating a type of optimization method. The first information may include a first syntax element indicating whether the optimization purpose is machine analysis or a second syntax element indicating whether the optimization purpose is human viewing. For example, the first syntax element may be optimization_for_machine_analysis_flag, and the second syntax element may be optimization_for_human_viewing_flag.

As an example, the second information may indicate whether the type of optimization method is at least one of object-based optimization, temporal resampling optimization, spatial resampling optimization, temporal quality optimization, spatial quality optimization, and color vision deficiency optimization.

As another example, the second information may include a first flag object_based_flag indicating whether the type of optimization method is object-based optimization, a second flag temporal_resampling_flag indicating whether the type of optimization method is temporal resampling optimization, a third flag spatial_resampling_flag indicating whether the type of optimization method is spatial resampling optimization, a fourth flag temporal_quality_flag indicating whether the type of optimization method is temporal quality optimization, a fifth flag spatial_quality_flag indicating whether the type of optimization method is spatial quality optimization, and a sixth flag color_vision_deficiency_flag indicating whether the type of optimization method is color vision deficiency optimization.

In various embodiments, the information on the optimization may further include a cancellation flag optimization_cancel_flag indicating whether the persistence of previously applied optimization is canceled and a persistence flag optimization_persistence_flag indicating the persistence of optimization. When the cancellation flag has a value of 1, this represents that the persistence of previously applied optimization is canceled, and when the cancellation flag has a value of 0 (or not true), optimization_persistence_flag, optimization_for_human_viewing_flag, optimization_for_machine_analysis_flag, and optimization_type may be defined.

When the persistence flag has a value of 1, this represents that optimization is applied to a current picture and all follow-up pictures, and when the persistence flag has a value of 0, this represents that optimization is only applied to the

current picture.

When optimization_for_human_viewing_flag is set to a value indicating that optimization is intended for human viewing (i.e., 1), optimization_for_machine_analysis_flag may be set to a value indicating that optimization is not intended for machine analysis (i.e., 0).

When optimization_for_human_viewing_flag is set to a value indicating that optimization is not intended for human viewing (i.e., 0), optimization_for_machine_analysis_flag may be set to a value indicating that optimization is intended for machine analysis (i.e., 1).

That is, neither the first syntax element nor the second syntax element may be set to a value of 0. In other words, the first syntax element may have a value indicating that optimization is not intended for machine analysis, and the second syntax element may have a value indicating that optimization is intended for human viewing. Alternatively, the first syntax element may have a value indicating that optimization is intended for machine analysis, and the second syntax element may have a value indicating that optimization is not intended for human viewing.

The first syntax element and the second syntax element may not simultaneously (or both) be assigned (or set to) a value indicating that optimization is not intended for machine analysis and a value indicating that optimization is not intended for human viewing, respectively. In other words, a value indicating that optimization is not intended for machine analysis and a value indicating that optimization is not intended for human viewing may not simultaneously (at the same time) be assigned (or set) to the first syntax element and the second syntax element, respectively.

The encoder may encode the generated information on the optimization (S2020). The information on the optimization encoder_optimization_info including the first information and the second information may be encoded in a bitstream.

FIG. 21 is a diagram illustrating a decoding method according to an embodiment of the present disclosure. For example, the decoding method of FIG. 21 may be performed by a decoding apparatus (or decoder).

Referring to FIG. 21, the decoder may acquire information on optimization applied to a video from a bitstream (S2100). The information on optimization including first information indicating the optimization purpose and the second information indicating the type of optimization method may be acquired.

The decoder may determine an optimization purpose and method on the basis of the information on optimization (S2110). The decoder may determine the optimization purpose on the basis of the first information indicating the optimization purpose and determine the optimization method on the basis of the second information indicating the optimization method.

For example, it may be determined whether the optimization purpose is machine analysis or human viewing on the basis of a value of the first syntax element and/or a value of the second syntax element. When the optimization purpose is determined as machine analysis, this may represent that the optimization is suitable for performing a machine task. When the optimization purpose is determined as human viewing, this may represent that the optimization is suitable for human viewing.

As described above, the first syntax element may have a value indicating that the optimization purpose is not machine analysis, and the second syntax element may have a value indicating that the optimization purpose is human viewing. Alternatively, the first syntax element may have a value indicating that the optimization purpose is machine analysis, and the second syntax element may have a value indicating that the optimization purpose is not human viewing. The value of the first syntax element indicating that the optimization purpose is not machine analysis and the value of the second syntax element indicating that the optimization purpose is not human viewing may not be assigned (or set) simultaneously (at the same time). In other words, the first syntax element and the second syntax element may not simultaneously (or both) be assigned (or set to) the value indicating that the optimization purpose is not machine analysis and the value indicating that the optimization purpose is not human viewing, respectively.

The optimization method may be determined by a value of a syntax element indicating a type of optimization method or syntax elements expressed in accordance with types of optimization methods. For example, as shown in Table 14, when the value is "(optimization_type & 0x10) != 0," a type of optimization method may be determined as object-based optimization.

In the present disclosure, as an example, all the names of the foregoing syntax elements are arbitrarily specified for clarity of description and do not limit the names of the syntax elements. Also, each syntax element may be referred to as "information." Further, syntax elements may be acquired from a bitstream but may also be derived from other syntax elements, which may be included in an embodiment of the present disclosure.

Moreover, a bitstream generated using an image encoding method may be stored in a non-transitory computer-readable recording medium.

In addition, as another example, a bitstream generated using an image encoding method may be transmitted to another device (e.g., an image decoding apparatus, etc.). In this case, a method of transmitting the bitstream may include a process of transmitting the bitstream.

Exemplary methods of the present disclosure are expressed as a series of operations for clarity of description. However, this is not intended to limit the order in which steps are performed, and steps may be performed simultaneously or

in a different order as necessary. To implement a method according to the present disclosure, illustrated steps may additionally include other steps, some steps may be excluded while remaining steps may be included, or some steps may be excluded and other additional steps may be included.

According to the present disclosure, an image encoding apparatus or an image decoding apparatus that performs a certain operation (step) may perform an operation (step) of checking a condition or situation for performing the operation (step). For example, when it is described that a certain operation is performed upon satisfaction of a certain condition, the image encoding apparatus or the image decoding apparatus may perform an operation of determining whether the certain condition is satisfied and then perform the certain operation.

Various embodiments of the present disclosure do not enumerate all possible combinations but are intended to describe representative aspects of the present disclosure, and details described in the embodiments may be applied independently or in any combination of two or more.

The embodiments described in the present disclosure may be executed by being implemented on a processor, a microprocessor, a controller, or a chip. For example, functional units shown in each drawing may be executed by being implemented on a computer, a processor, a microprocessor, a controller, or a chip. In this case, information for implementation (e.g., information on instructions) or an algorithm may be stored in a digital storage medium.

Also, a decoder (decoding apparatus) and an encoder (encoding apparatus) to which embodiment(s) of the present disclosure are applied may be included in a multimedia broadcasting transceiver device, a mobile communication terminal, a home cinema video device, a digital cinema video device, a surveillance camera, a video conversation device, a device for real-time communication such as video communication, a mobile streaming device, a storage medium, a camcorder, a device for providing a video on demand (VoD) service, an over the top (OTT) video device, a device for providing an Internet streaming service, a three-dimensional (3D) video device, a virtual reality (VR) device, an argumente reality (AR) device, a video phone device, a transportation terminal (e.g., a vehicle (including autonomous driving vehicle) terminal, a robot terminal, an airplane terminal, a ship terminal, etc.), a medical video device, etc., and may be used to process a video signal or a data signal. For example, the OTT video device may include a game console, a Blu-ray player, an Internet-connected television (TV), a home theater system, a smartphone, a tablet personal computer (PC), a digital video recorder (DVR), and the like.

Further, a processing method to which embodiment(s) of the present disclosure is applied may be produced in the form of a program executed by a computer, and stored in a computer-readable recording medium. Multimedia data having a data structure according to embodiment(s) of the present document may also be stored in the computer-readable recording medium. The computer-readable recording medium includes all kinds of storage devices and distributed storage devices in which computer-readable data is stored. The computer-readable recording medium may include, for example, a Blu-ray disc (BD), a Universal Serial Bus (USB) device, a read-only memory (ROM), a programmable ROM (PROM), an erasable programmable ROM (EPROM), an electrically erasable programmable ROM (EEPROM), a random access memory (RAM), a compact disc (CD)-ROM, magnetic tape, a floppy disk, and an optical data storage device. In addition, the computer-readable recording medium includes a medium implemented in the form of a carrier (e.g., transmission via the Internet). A bitstream generated through an encoding method may be stored in a computer-readable recording medium or transmitted via a wired or wireless communication network.

Embodiment(s) of the present disclosure may be implemented as a computer program product of program code, and the program code may be executed on a computer according to embodiment(s) of the present disclosure. The program code may be stored on a computer-readable carrier.

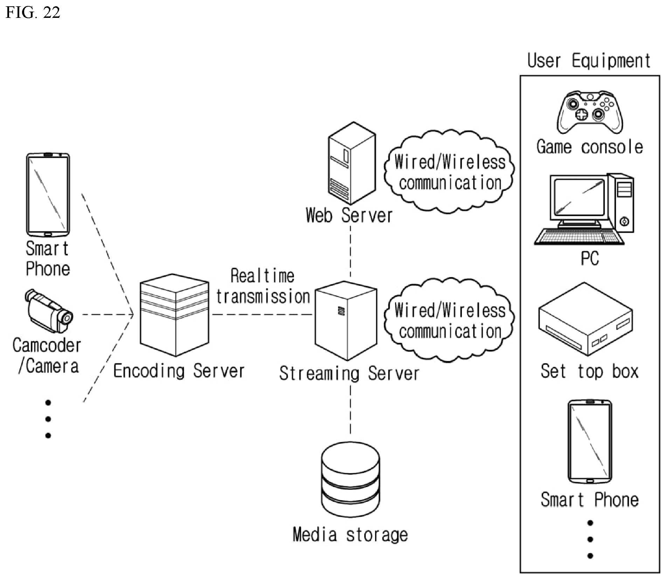

FIG. 22 is a diagram showing an example of a content streaming system to which embodiments of the present disclosure may be applied.

Referring to FIG. 22, the content streaming system to which an embodiment of the present disclosure is applied may broadly include an encoding server, a streaming server, a web server, a media storage, a user device, and a multimedia input device.

An encoding server compresses content input from multimedia input devices such as a smartphone, camera, or camcorder into digital data, generating a bitstream and transmitting it to a streaming server. As another example, when multimedia input devices such as a smartphone, camera, or camcorder directly generate a bitstream, an encoding server may be omitted.

A bitstream may be generated by an image encoding method and/or an image encoding apparatus to which an embodiment of the present disclosure is applied, and a streaming server may temporarily store a bitstream during the process of transmitting or receiving a bitstream.

A streaming server may transmit multimedia data to a user device based on a user request through a web server, and a web server may serve as an intermediary that informs a user of available service. When a user requests a desired service from a web server, a web server may send it to a streaming server, and a streaming server may transmit multimedia data to a user. In this case, a content streaming system may include a separate control server, and in this case, a control server may function to control a command/a response between devices within a content streaming system.

A streaming server may receive a content from a media storage and/or an encoding server. For example, when

receiving a content from an encoding server, a content may be received in real time. In this case, to provide a seamless streaming service, a streaming server may store a bitstream for a certain period of time.

Examples of a user device may include a mobile phone, a smartphone, a laptop computer, a digital broadcasting terminal, a personal digital assistant (PDA), a portable multimedia player (PMP), a navigation device, a slate PC, a tablet PC, an ultrabook, a wearable device (i.e., a smartwatch, a smart glass, a head-mounted display (HMD)), a digital TV, a desktop computer, a digital signage, etc.

Each server within a content streaming system may be operated as a distributed server, in which case data received by each server may be processed in a distributed manner.

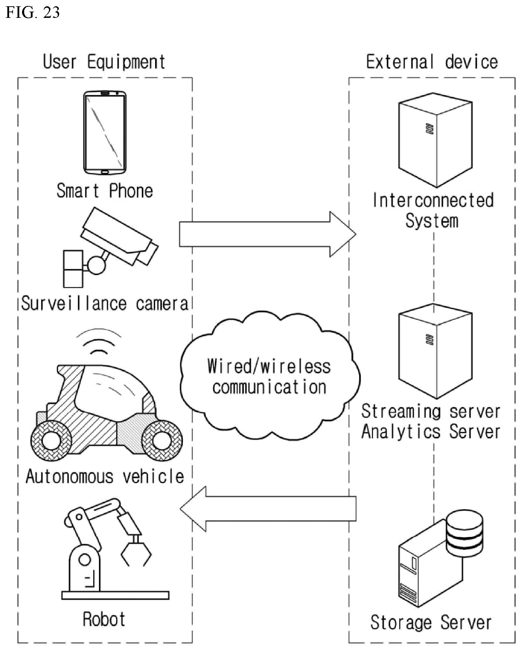

FIG. 23 is a diagram showing another example of a content streaming system to which embodiments of the present disclosure may be applied.

Referring to FIG. 23, in an embodiment such as VCM, a task may be performed by a user terminal or a task may be performed by an external device (e.g., a streaming server, an analysis server, etc.) according to the performance of a device, a user's request, the characteristics of a task to be performed, etc. In this way, in order to transmit information necessary for performing a task to an external device, a user terminal may generate directly or through an encoding server a bitstream including information necessary for performing a task (e.g., information such as a task, a neural network and/or usage).

An analysis server may perform a task requested by a user after decoding encoded information transmitted from a user terminal (or, from an encoding server). An analysis server may transmit a result obtained by performing a task to a user terminal again or to another linked service server (e.g., a web server). For example, an analysis server may transmit a result obtained by performing a task for determining a fire to a firefighting-related server. An analysis server may include a separate control server, in which case a control server may play a role in controlling a command/a response between each device associated with an analysis server and a server. In addition, an analysis server may request desired information from a web server based on information about a task that a user device wants to perform and a task that a user device may perform. When an analysis server requests a desired service from a web server, a web server may transmit it to an analysis server, and an analysis server may transmit data therefor to a user terminal. In this case, the control server of a content streaming system may play a role in controlling a command/a response between each device within a streaming system.

[Industrial Applicability]

An embodiment according to the present disclosure may be used to encode/decode a feature/a feature map.

## Claims

**1.** A method comprising:

obtaining information on optimization applied to a video from a bitstream; and
determining a purpose and a method of the optimization based on the information on the optimization,
wherein the information on the optimization includes first information indicating an optimization purpose and second information indicating a type of an optimization method.

**2.** The method of claim 1, wherein the first information includes a first syntax element indicating whether the optimization purpose is for machine analysis or a second syntax element indicating whether the optimization purpose is for human viewing.

**3.** The method of claim 2, wherein a value of the first syntax element indicates that the optimization purpose is for the machine analysis.

**4.** The method of claim 2, wherein a value of the second syntax element indicates that the optimization purpose is for the human viewing.

**5.** The method of claim 2, wherein a value of the first syntax element indicating that the optimization purpose is not for the machine analysis and a value of the second syntax element indicating that the optimization purpose is not for the human viewing are not both set.

**6.** The method of claim 1, wherein the second information indicates that whether the type of the optimization method includes at least one of an object-based optimization, a temporal resampling optimization, a spatial resampling optimization, a temporal quality optimization, a spatial quality optimization or a color vision deficiency optimization.

7. The method of claim 6, wherein the spatial resampling optimization includes upsampling and down-sampling.

8. The method of claim 1, wherein the information on the optimization further includes a cancel flag indicating whether to cancel a persistence of previously applied optimization and a persistence flag indicating a persistence of the applied optimization.

9. The method of claim 7, wherein the persistence flag equal to 1 specifies that the optimization applies for a current picture and all subsequent pictures, and
wherein the persistence equal to 0 specifies that the optimization applies for current picture only.

10. The method of claim 1, wherein the second information includes a first flag indicating whether the optimization method is an object-based optimization, a second flag indicating whether the optimization method is a temporal resampling optimization, a third flag indicating whether the optimization method is a spatial resampling optimization, a forth flag indicating whether the optimization method is a temporal quality optimization, a fifth flag indicating whether the optimization method is a spatial quality optimization or a sixth flag indicating whether the optimization method is a color vision deficiency optimization.

11. The method of claim 10, wherein resampling information is defined based on a value of the second flag, and wherein resampling information indicates an original temporal resolution and a frame interval in a case of the original temporal resolution.

12. A method comprising:

performing an optimization of a video;
generating information on the optimization; and
encoding the information on the optimization,
wherein the information on the optimization includes first information indicating an optimization purpose and second information indicating a type of an optimization method.

13. The method of claim 12, wherein the first information includes a first syntax element indicating whether the optimization purpose is for machine analysis or a second syntax element indicating whether the optimization purpose is for human viewing.

14. The method of claim 13, wherein a value of the first syntax element indicates that the optimization purpose is for the machine analysis.

15. The method of claim 13, wherein a value of the second syntax element indicates that the optimization purpose is for the human viewing.

16. The method of claim 13, wherein a value of the first syntax element indicating that the optimization purpose is not for the machine analysis and a value of the second syntax element indicating that the optimization purpose is not for the human viewing are not both set.

17. The method of claim 12, wherein the information on the optimization further includes a cancel flag indicating whether to cancel a persistence of previously applied optimization and a persistence flag indicating a persistence of the applied optimization.

18. A computer-readable digital storage medium for storing a bitstream generated using an encoding method, the bitstream comprising: information on optimization applied to a video,
wherein the information on the optimization includes first information indicating an optimization purpose and second information indicating a type of an optimization method.

19. A method comprising:

generating a bitstream of a video, the bitstream is generated by performing an optimization of the video; generating information on the optimization; and encoding the information on the optimization, and
transmitting the data including the bitstream,
wherein the information on the optimization includes first information indicating an optimization purpose and

second information indicating a type of an optimization method.

FIG. 1

10
20
11
FEATURE OBTAINING UNIT
23
TASK ANALYSIS/ RENDERING UNIT
12
ENCODER
22
DECODER
13
TRANSMITTER
21
RECEIVER

Image/Video
210
211
Image/Video Encoder
212
Image/Video Decoder
Reconstructed Image/Video
Human Vision
220
221
Feature Extraction Network
222
VCM Encoder
223
VCM Decoder
Reconstructed Feature/Feature map
Machine (Vision) Task

FIG. 2

FIG. 3

INPUT IMAGE
(PICTURE)
300
ENCODING APPARATUS
210
IMAGE
PARTITIONER
331
330
332
TRANSFORMER
333
QUANTIZER
340
ENTROPY
ENCODER
BITSTREAM
DEQUANTIZER
334
INVERSE
TRANSFORMER
335
350
INTER
PREDICTOR
(321)
INTRA
PREDICTOR
(322)
320
DPB
MEMORY
370
FILTER
360

FIG. 4

BITSTREAM
400
DECODING APPARATUS
ENTROPY ENCODER
410
421
INVERSE QUANTIZER
422
INVERSE TRANSFORMER
420
440
+
450
FILTER
RECONSTRUCTED IMAGE (PICTURE)
MEMORY
DPB
460
431
INTRA PREDICTOR
INTER PREDICTOR
430
432

FIG. 5

START
PREDICT
S510
RESIDUAL PROCESS
S520
ENCODE FEATURE/FEATURE MAP INFORMATION INCLUDING PREDICTION INFORMATION AND RESIDUAL INFORMATION
S530
END

FIG. 6

START
OBTAIN FEATURE/FEATURE MAP INFORMATION FROM BITSTREAM
S610
PREDICT
S620
RESIDUAL PROCESS
S630
RECONSTRUCT FEATURE/FEATURE MAP
S640
INLOOP FILTERING (optional)
S650
END

FIG. 7

W
H
C
700
FEATURE
EXTRACTION
NETWORK
W'
H'
Cn
C'
C1
C0
VIDEO SOURCE (710)
FEATURE SET (720)

FIG. 8A

B channel
211
103
80
32
155
123
76
20
57
25
69
87
117
G channel
231
159
197
134
99
34
69
110
155
34
66
147
153
R channel
253
144
120
251
41
55
56
244
233
10
15
16
22
30
250
240
235
22
50
52
60
201
233
210
32
44
62
22
211
198
27
64
89
57
32
125
187
28
23
2
3
17
133
176
19
17
11
0
16

FIG. 8B

Channel 64
-1.25 -0.91 0.75 1.52 -0.72 5.18 4.22
-1.27 0.36 2.27 3.20 1.34 -0.65 -0.94
-0.41 -0.65
-0.62 0.51
3.12 -0.95
5.52 -1.25
-1.59 10.52
Channel 2
Channel 1
-0.64 -0.33 0.98 1.52 -0.72 1.30 1.32
-1.02 0.34 0.55 -0.90 1.34 -0.18 -0.29
-1.00 0.37 0.89 -0.90 1.36 -0.51 -0.31
-0.36 0.21 0.70 -0.42 1.93 -0.62 0.20
0.99 0.39 2.12 -0.31 0.18 1.6 -0.27
2.24 -0.33 0.33 2.40 -0.73 1.82 -0.56
-0.50 0.03 1.21 -0.40 1.73 -0.51 0.23

FIG. 9

RESIDUAL DATA
(A)
PRIMARY
TRANSFORMER
(911)
TRANSFORM
COEFFICIENTS
(B)
SECONDARY
TRANSFORMER
(912)
TRANSFORM
COEFFICIENTS
(C)
TRANSFORMER (910)
TRANSFORM
COEFFICIENTS
(C')
(INVERSE)
SECONDARY
TRANSFORMER
(921)
TRANSFORM
COEFFICIENTS
(B')
(INVERSE)
PRIMARY
TRANSFORMER
(921)
RESIDUAL DATA
(A')
INVERSE TRANSFORMER (920)

FIG. 10

5
4
3
2
1
0
-1
-2
A B C D
Quantization Group
CHANNEL 1
CHANNEL 2
CHANNEL 3
CHANNEL 4
5
4
3
2
1
0
-1
-2
A
B
C
D

FIG. 11

CONTEXT MODEL UPDATE
NON-BINARIZED
SYNTAX ELEMENT
BINARIZER
BIN STRING
CONTEXT
MODELER
REGULAR
CODING
ENGINE
BITSTREAM
SYNTAX
ELEMENT
REGULAR
BYPASS
CODING
ENGINE
BINARIZED SYNTAX ELEMENT
BYPASS
BINARY ARITHMETIC CODER

FIG. 12

START
S1210
BINARIZATION
S1220
ENTROPY ENCODING
END

FIG. 13

1300
1301
BINARIZER
SYNTAX ELEMENT(S)
BITSTREAM
1302
ENTROPY ENCODING PROCESSOR
ENTROPY ENCODER

FIG. 14

START
S1410
BINARIZATION
S1420
ENTROPY DECODING
END

FIG. 15

1500
1501
BINARIZER
BITSTREAM
VALUE OF SYNTAX ELEMENT(S)
1502
ENTROPY DECODING
PROCESSOR
ENTROPY DECODER

FIG. 16

| FEATURE CODING LAYER | 1630 |
|---|---|
| NEURAL NETWORK (FEATURE) ABSTRACTION LAYER | 1620 |
| FEATURE EXTRACTION LAYER | 1610 |

FIG. 17

NNAL UNIT HEADER
NNAL UNIT PAYLOAD
(RBFP: Raw Byte Feature Payload)
GROUP HEADER
GROUP DATA
CODING INDICATOR
FEATURE CHANNEL
FEATURE CHANNEL
FEATURE CHANNEL
FEATURE CHANNEL
FEATURE CHANNEL
FEATURE CHANNEL
TYPE
PREDICTION
SIDE INFORMATION
RESIDUAL DATA

FIG. 18

COMPONENT A
COMPONENT B
ENCODER
VIDEO
OPTIMIZATION FOR HUMAN VIEWING AND MACHINE ANALYSIS
DECODER
MACHINE TASK A
MACHINE TASK B
USER
PREPROCESSING TECHNIQUE
ENCODING TECHNIQUE
POSTPROCESSING TECHNIQUE

FIG. 19

GENERAL PROFILE
Main 10
Multilayer Main 10
Main 10 still picture
Main 10 4:4:4 profile
Main 10 4:4:4 Still picture
Multilayer Main 10 4:4:4

FIG. 20

START
S2000
OPTIMIZE IMAGE
S2010
GENERATE INFORMATION ON PERFORMED OPTIMIZATION
S2020
ENCODE INFORMATION ON OPTIMIZATION
END

FIG. 21

START
S2100
ACQUIRE INFORMATION ON OPTIMIZATION APPLIED TO IMAGE FROM BITSTREAM
S2110
DETERMINE OPTIMIZATION PURPOSE AND METHOD BASED ON INFORMATION ON OPTIMIZATION
END

FIG. 22

User Equipment
Game console
PC
Set top box
Smart Phone
Wired/Wireless communication
Web Server
Wired/Wireless communication
Smart Phone
Camcoder /Camera
Realtime transmission
Encoding Server
Streaming Server
Media storage

FIG. 23

User Equipment
External device
Smart Phone
Surveillance camera
Autonomous vehicle
Robot
Wired/wireless communication
Interconnected System
Streaming server
Analytics Server
Storage Server

## INTERNATIONAL SEARCH REPORT

International application No. **PCT/KR2024/015089**

**A. CLASSIFICATION OF SUBJECT MATTER**

**H04N 19/70**(2014.01)i; **H04N 19/59**(2014.01)i; **H04N 19/587**(2014.01)i; **H04N 19/20**(2014.01)i

According to International Patent Classification (IPC) or to both national classification and IPC

**B. FIELDS SEARCHED**

Minimum documentation searched (classification system followed by classification symbols)

H04N 19/70(2014.01); G06N 3/02(2006.01); G06T 9/00(2006.01); H04N 19/105(2014.01); H04N 19/124(2014.01); H04N 19/513(2014.01); H04N 19/577(2014.01); H04N 19/61(2014.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 샘플링 (sampling), 비트스트림 (bitstream), 최적화 (optimization), 기계 분석 (machine analysis), 사용자 시각 (human viewing)

**C. DOCUMENTS CONSIDERED TO BE RELEVANT**

| Category* | Citation of document, with indication, where appropriate, of the relevant passages | Relevant to claim No. |
|---|---|---|
| Y | JIANG, Wei et al. Adaptive Human-Centric Video Compression for Humans and Machines. 2023 IEEE/CVF Conference on Computer Vision and Pattern Recognition Workshops (CVPRW). pp. 1121-1129, 17 June 2023. See pages 1121-1128. | 1-19 |
| Y | WO 2023-113209 A1 (HYUNDAI MOTOR COMPANY et al.) 22 June 2023 (2023-06-22) See paragraphs [0050]-[0177]. | 1-19 |
| A | WO 2023-126568 A1 (NOKIA TECHNOLOGIES OY) 06 July 2023 (2023-07-06) See claims 1-12. | 1-19 |
| A | US 2021-0218997 A1 (NOKIA TECHNOLOGIES OY) 15 July 2021 (2021-07-15) See claims 1-5. | 1-19 |
| A | KR 10-2021-0036411 A (HUAWEI TECHNOLOGIES CO., LTD.) 02 April 2021 (2021-04-02) See paragraphs [0087]-[0139]. | 1-19 |

☐ Further documents are listed in the continuation of Box C.

☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **24 January 2025** | **24 January 2025** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
**Information on patent family members**

International application No.
**PCT/KR2024/015089**

| Patent document cited in search report | Publication date (day/month/year) | Patent family member(s) | Publication date (day/month/year) |
|---|---|---|---|
| WO 2023-113209 A1 | 22 June 2023 | CN 118414831 A | 30 July 2024 |
| | | KR 10-2023-0090999 A | 22 June 2023 |
| | | US 2024-0333938 A1 | 03 October 2024 |
| WO 2023-126568 A1 | 06 July 2023 | EP 4458017 A1 | 06 November 2024 |
| US 2021-0218997 A1 | 15 July 2021 | EP 4088454 A1 | 16 November 2022 |
| | | EP 4088454 A4 | 17 January 2024 |
| | | US 11575938 B2 | 07 February 2023 |
| | | WO 2021-140273 A1 | 15 July 2021 |
| KR 10-2021-0036411 A | 02 April 2021 | CN 111953997 A | 17 November 2020 |
| | | CN 111953997 B | 09 August 2024 |
| | | CN 112042197 A | 04 December 2020 |
| | | CN 118828009 A | 22 October 2024 |
| | | EP 3913922 A1 | 24 November 2021 |
| | | JP 2022-502966 A | 11 January 2022 |
| | | MX 2021004373 A | 04 June 2021 |
| | | US 11516464 B2 | 29 November 2022 |
| | | US 11889061 B2 | 30 January 2024 |
| | | US 2021-0176462 A1 | 10 June 2021 |
| | | US 2023-0121428 A1 | 20 April 2023 |
| | | WO 2020-228560 A1 | 19 November 2020 |

Form PCT/ISA/210 (patent family annex) (July 2022)